# EUROPEAN PATENT APPLICATION

(11) **EP 4 517 860 A1**
(43) Date of publication of application: **05.03.2025**
(21) Application number: 23934618.2
(22) Date of filing: 28.04.2023
(51) Int. Cl.: H01M 4/133, H01M 10/0525

(54) **SECONDARY BATTERY AND ELECTRIC DEVICE**

(71) Applicant: Contemporary Amperex Technology (Hong Kong) Limited, Hong Kong (HK)
(72) Inventor: ZHANG, Limei, Ningde, Fujian 352100 (CN); CHEN, Peipei, Ningde, Fujian 352100 (CN); LIU, Jiao, Ningde, Fujian 352100 (CN); REN, Jiamo, Ningde, Fujian 352100 (CN)
(74) Representative: Gong, Jinping
(86) International application number: PCT/CN2023/091698
(87) International publication number: WO 2024/221426

(57) **Abstract**

This application provides a secondary battery. A negative active material thereof includes a graphite material. A non-aqueous electrolyte thereof includes chain carboxylate. An OI value of a negative electrode plate, a resistance value R of the negative electrode plate, and a mass percent W₀ of a first solvent in a solvent satisfy 0.08/mΩ ≤ W₀ × 100/(R × OI) ≤ 5/mΩ, where the OI value means a ratio of an intensity of a 004 crystal plane diffraction peak to an intensity of a 110 crystal plane diffraction peak of the graphite material, and R is in units of mQ.

## Description

### TECHNICAL FIELD

This application relates to the technical field of secondary batteries, and in particular, to a secondary battery and an electrical device.

### BACKGROUND

The description in the background section merely provides background information related to this application, but does not necessarily constitute related art.

With the development of the secondary battery technology, secondary batteries have been widely applied in energy storage power supply systems such as hydro, thermal, wind, and solar power stations, and in many other fields such as electronic device power supplies, electric tools, electric bicycles, electric motorcycles, electric vehicles, military equipment, and aerospace. The evolution of technology and society imposes higher comprehensive requirements on the fast-charge performance, cycle performance, safety performance, and other performance of the secondary batteries.

Therefore, currently it is necessary to develop a new technology of secondary batteries that are superior in fast-charge performance, cycle performance, and safety performance concurrently.

### SUMMARY

In view of the above situation, this application provides a secondary battery and an electrical device. The secondary battery includes a reasonably matched negative electrode plate and non-aqueous electrolyte, and achieves superior overall performance in terms of fast-charge performance, cycle performance, and safety performance.

According to a first aspect, this application provides a secondary battery. The secondary battery includes a positive electrode plate, a negative electrode plate, and a non-aqueous electrolyte. The negative electrode plate includes a negative active material layer. The negative active material layer includes a negative active material. The negative active material includes a graphite material. The non-aqueous electrolyte includes a solvent. The solvent includes a first solvent. The first solvent is chain carboxylate.

An OI value of the negative electrode plate, a resistance value R of the negative electrode plate, and a mass percent W₀ of the first solvent in the solvent satisfy the following relation: 0.08/mΩ ≤ W₀ × 100/(R × OI) ≤ 5/mΩ.

The OI value of the negative electrode plate means a ratio of an intensity of a 004 crystal plane diffraction peak to an intensity of a 110 crystal plane diffraction peak of the graphite material, and R is in units of mΩ.

The OI value of the negative electrode plate reflects the degree of anisotropy of the crystal grain arrangement direction in the negative active material layer. By comprehensively controlling the OI value of the negative electrode plate, the resistance value R of the negative electrode plate, and the mass percent W₀ of the chain carboxylate solvent in the specified solvent, the secondary battery can be superior in fast-charge performance, cycle performance, and safety performance concurrently. When the OI value, R, and W₀ satisfy the above relationships, on the one hand, the chain carboxylate in the non-aqueous electrolyte assumes characteristics of a low viscosity and conductivity, thereby significantly enhancing the electrical conductivity of the battery, and improving the low-temperature performance and cycle stability of the battery. On the other hand, the orientation index of the negative electrode plate is appropriate, and the direction selectivity is appropriate during intercalation of active ions (such as lithium ions), so that the intercalation expansion of the active ions (such as lithiation expansion) can be dispersed to different directions, thereby reducing the cycle expansion of the electrode plate and the battery cell, effectively alleviating the problem that the expansion of the electrode plate is aggravated by poor stability of the interface between the chain carboxylate and the negative electrode, enhancing safety of the battery, and alleviating the concentration polarization of the active ions during transmission in the negative electrode plate. Such characteristics combined with an appropriate resistance value R of the negative electrode plate can enhance the fast-charge capability of the battery significantly. Therefore, by comprehensively controlling the OI value, R, and W₀, the secondary battery can exhibit superior overall performance in terms of fast-charge performance, cycle performance, and safety performance, and achieve a short fast-charge time, a low cycle expansion rate, and a high cycle capacity retention rate concurrently.

In some embodiments, the OI value satisfies: 6 ≤ OI ≤ 25; optionally, 6 ≤ OI ≤ 18; and further optionally, 12 ≤ OI ≤ 18.

The QI value adjusted to fall within an appropriate range is conducive to reducing the directional selectivity during intercalation of the active ions, so that the intercalation expansion of the active ions can be more dispersive in different directions, and the active ion transmission performance of the negative electrode plate can be improved more effectively.

In some embodiments, 1 mΩ ≤ R ≤ 50 mΩ; optionally, 5 mΩ ≤ R ≤ 30 mΩ; and further optionally, 10 mΩ ≤ R ≤ 20 mΩ.

By controlling the resistance value R of the negative electrode plate to fall within the specified range, the value of W₀×100/(R×OI) can be controlled to fall within a more appropriate range, thereby achieving better comprehensive effects in terms of a short fast-charge time, and a low cycle expansion rate, and a high cycle capacity retention rate, and improving the active ion transmission performance and electronic conductivity of the negative electrode plate.

In some embodiments, 10% ≤ W₀ ≤ 80%.

Optionally, 20% ≤ W₀ ≤ 80%; further optionally, 30% ≤ W₀ ≤ 70%; still further optionally, 50% ≤ W₀ ≤ 70%.

Alternatively, 10% ≤ W₀ ≤ 60%; further optionally, 20% ≤ W₀ ≤ 60%.

By controlling the mass percent W₀ of the first solvent in the specified solvent to fall within the specified range, the secondary battery can achieve a higher electrical conductivity in addition to superior performance in terms of fast-charge performance, cycle performance, and safety performance concurrently, and can be improved in terms of the low-temperature performance and cycle stability.

In some embodiments, 0.67 ≤ W₀ × 100/OI ≤ 10.

Optionally, 1 ≤ W₀ × 100/OI ≤ 10, further optionally, 1 ≤ W₀ × 100/OI ≤ 5; still further optionally, 3 ≤ W₀ × 100/OI ≤ 5.

Alternatively, 0.67 ≤ W₀ × 100/OI ≤ 4; further optionally, 1 ≤ W₀ × 100/OI ≤ 4.

On the basis of controlling the value of W₀ × 100/(R × OI) to satisfy the above relationship, the value of W₀ × 100/OI is controlled appropriately to further implement coordination between the chain carboxylate in the non-aqueous electrolyte and the crystal grain arrangement direction in the negative active material layer, thereby making it easier to enhance the overall performance in terms of fast-charge performance, cycle performance, and safety performance.

In some embodiments, 0.1/mΩ ≤ W₀ × 100/(R × OI) ≤ 5/mΩ; and optionally, 0.1/mΩ ≤ W₀ × 100/(R × OI) ≤ 2/mΩ.

Further controlling the value of W₀ × 100/(R × OI) to fall within the above range is more beneficial to comprehensively improving the fast-charge performance, cycle performance, and safety performance.

In some embodiments, the secondary battery satisfies a combination of the following characteristics: 6 ≤ OI ≤ 18, 10 mΩ ≤ R ≤ 20 mΩ, and 20% ≤ W₀ ≤ 80%.

Optionally, 12 ≤ OI ≤ 18, 10 mΩ ≤ R ≤ 20 mΩ, and 10% ≤ W₀ ≤ 60%; further optionally, 20% ≤ W₀ ≤ 60%.

Alternatively, 12 ≤ OI ≤ 18, 10 mΩ ≤ R ≤ 20 mΩ, and 50% ≤ W₀ ≤ 70%.

By finely and comprehensively controlling the OI value of the negative electrode plate to be 12 to 18, controlling the resistance value R of the negative electrode plate to be 10 mΩ to 20 mΩ, and controlling the mass percent W₀ of the chain carboxylate solvent in the specified solvent to be 20% to 80% (further optionally 10% to 60%), the secondary battery can be superior in fast-charge performance, cycle performance, and safety performance concurrently, and can achieve a high fast-charge capability, a low cycle expansion rate, and a high cycle capacity retention rate concurrently.

By controlling the values of different parameters, the secondary battery can be superior in one or more aspects. For example, in a case that the parameters satisfy 12 ≤ OI ≤ 18, 10 mΩ ≤ R ≤ 20 mΩ, and 20% ≤ W₀ ≤ 60%, the secondary battery can achieve a low cycle expansion rate and high cycle performance that are significantly excellent on the basis of superior overall performance. For another example, in a case that the parameters satisfy 12 ≤ OI ≤ 18, 10 mΩ ≤ R ≤ 20 mΩ, and 50% ≤ W₀ ≤ 70%, the secondary battery is significantly superior in a short fast-charge time and a low cycle expansion rate on the basis of superior overall performance.

In some embodiments, the first solvent includes a compound represented by Formula (1):

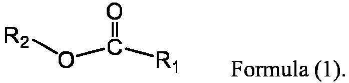

In the formula above, R₁ and R₂ each independently are C₁ to C₃ alkyl or C₁ to C₃ haloalkyl;

Optionally, R₁ and R₂ each independently are C₁ to C₃ alkyl or C₁ to C₃ fluoroalkyl.

Further optionally, R₁ and R₂ each independently are one of methyl, ethyl, propyl, fluoromethyl, fluoroethyl, or fluoropropyl.

Still further optionally, R₁ and R₂ each independently are one of methyl, ethyl, fluoromethyl, or fluoroethyl.

Still further optionally, the first solvent includes one or more of the following compounds: methyl acetate, ethyl acetate, methyl difluoroacetate, or ethyl difluoroacetate.

The first solvent with a relatively small molecular size may be selected. In this case, the viscosity of the first solvent is relatively low, thereby endowing the secondary battery with higher fast-charge performance.

In some embodiments, the non-aqueous electrolyte further includes a first additive. The first additive is diisocyanate.

In some embodiments, the first additive includes a compound with the following structure:

O=C=N-R₃-N=C=O Formula (2).

In the formula above, R₃ is an unsubstituted or Ra-substituted C₁ to C₁₈ alkylene; Ra includes one or more of the following substituents: halogen atom, -CN, -NCO, -OH, -COOH, -SOOH, -OC(=O)R₁₁, R₁₂OC(=O)-, C₁ to C₁₀ alkyl, C₂ to C₁₀ alkenyl, C₂ to C₁₀ alkynyl, or C₂ to C₁₀ oxaalkyl; and R₁₁ and R₁₂ each independently are alkyl or haloalkyl.

Optionally, R₃ is C₂ to C₁₀ alkylidene, C₂ to C₁₀ heteroalkylidene, C₆ to C₁₈ arylene, C₂ to C_{I8} heteroarylene, C₃ to C₁₈ alicyclylene, or C₃ to C₁₈ heteroalicyclylene, and any one of the foregoing groups is unsubstituted or Ra-substituted.

Alternatively, R₃ is unsubstituted or Ra-substituted C₂ to C₁₀ alkylidene, unsubstituted or Ra-substituted C₃ to C₁₈ divalent cycloalkyl, or unsubstituted or Ra-substituted C₆ to C₁₈ arylene; further optionally, R₃ is C₂ to C₁₀ alkylidene, C₆ to C₁₈ divalent cycloalkyl or C₆ to C₁₈ arylene; still further optionally, R₃ is C₄ to C₁₀ alkylidene, C₆ to C₁₄ divalent cycloalkyl or C₆ to C₁₄ arylene; still further optionally, R₃ is C₄ to C₁₀ alkylidene, C₆ to C₁₀ divalent cycloalkyl or C₆ to C₁₀ arylene; still further optionally, R₃ is a C₄ to C₈ hexylidene, C₆ to C₁₀ divalent cycloalkyl containing a hexyl ring, or C₆ to C₁₀ arylene containing a benzene ring.

Alternatively, the first additive includes one or more of the following compounds: hexamethylene diisocyanate, 1,4-bis(isocyanatomethyl)cyclohexane, 1,3-diisocyanatobenzene, or 2,4-diisocyanate-1-toluene.

In some embodiments, a mass percent of the first additive in the non-aqueous electrolyte is 0% to 11%.

Optionally, the mass percent of the first additive in the non-aqueous electrolyte is 0.005% to 11%.

Further optionally, the mass percent of the first additive in the non-aqueous electrolyte is 0.005% to 10%.

Still further optionally, the mass percent of the first additive in the non-aqueous electrolyte is 0.01% to 10%.

Still further optionally, the mass percent of the first additive in the non-aqueous electrolyte is 0.1% to 5%.

Still further optionally, the mass percent of the first additive in the non-aqueous electrolyte is 1% to 5%.

The dosage of the chain carboxylate (the first solvent) improves the fast-charge capability of the battery. However, due to the factor of compatibility between the carboxylate and the negative electrode plate, if the mass percent W₀ of the chain carboxylate, the OI value, and the resistance value R of the negative electrode plate are not well matched, the expansion of the negative electrode plate itself may be aggravated, the gas production at the interface may be aggravated, and the capacity fading of the battery cell and the cycle performance of the battery may be deteriorated. By adding the first additive into the non-aqueous electrolyte, a protective solid electrolyte interface (SEI) layer can be formed on the surface of the negative electrode plate. This protective layer can assist active ions in being intercalated into the negative active material layer of the negative electrode plate. In this way, the intercalation expansion effect of the active ions of the negative electrode plate can be evenly conducted in all directions, thereby reducing the cycle expansion rate of the negative electrode plate. In addition, the first additive can also significantly improve the stability of the interface between an electrolyte solution and a negative electrode plate, alleviate depletion of the electrolyte solution and damage to the negative electrode structure during cycling of the secondary battery, and in turn, significantly improve the cycle performance of the secondary battery.

In some embodiments, the non-aqueous electrolyte further includes a second additive. The second additive includes one or more of lithium monofluorophosphate, lithium difluorophosphate, lithium tetrafluoroborate, a compound represented by Formula (3), or fluorosulfonate.

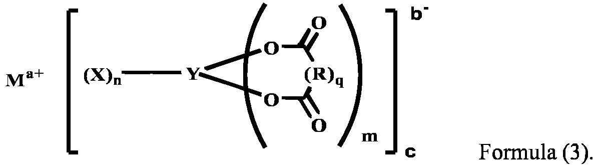

In Formula (3), a, b, and c each independently are a positive integer, m is an integer selected from 1 to 3, n is an integer selected from 0 to 4, and q is 0 or 1; M^{a+} is a metal ion with an a-valence positive charge. Any one Y is independently a boron atom or a phosphorus atom. X is a halogen atom. Any one R is independently one of a substituted or unsubstituted C₁ to C₁₀ alkylidene, substituted or unsubstituted C₁ to C₁₀ haloalkylidene, substituted or unsubstituted C₆ to C₂₀ arylene, or substituted or unsubstituted C₆ to C₂₀ haloarylene.

Optionally, any one R is independently one of Rc-substituted or unsubstituted C₁ to C₁₀ alkylidene, Rc-substituted or unsubstituted C₁ to C₁₀ haloalkylidene, Rc-substituted or unsubstituted C₆ to C₂₀ arylene, or Rc-substituted or unsubstituted C₆ to C₂₀ haloarylene. A substituent in the Re-substituted C₁ to C₁₀ alkylidene, a substituent in the Re-substituted C₁ to C₁₀ haloalkylidene, a substituent in the Rc-substituted C₆ to C₂₀ arylene, and an Rc substituent in the Rc-substituted C₆ to C₂₀ haloarylene each independently optionally include one or more of the following substituents: halogen atom, -CN, -NCO, - OH, -COOH, -SOOH, -OC=(O)R₄₁, -C=(O)OR₄₂, C₁ to C₁₀ alkyl, C₂ to C₁₀ alkenyl, C₂ to C₁₀ alkynyl, C₂ to C₁₀ alkoxyl, where R₄₁ and R₄₂ each independently are C₁ to C₆ alkyl.

Optionally, in the non-aqueous electrolyte, M in M^{a+} includes one or more of Li, Na, K, Rb, Cs, Mg, Ca, Ba, Al, Fe, Cu, or Ni.

Optionally, a, b, and c each independently are selected from 1, 2, or 3.

In some embodiments, the second additive includes one or more of lithium difluorophosphate, lithium monofluorophosphate, lithium tetrafluoroborate, lithium fluorosulfonate, or sodium fluorosulfonate.

In some embodiments, a mass percent of the second additive in the non-aqueous electrolyte is 0.005% to 11%.

Optionally, the mass percent of the second additive in the non-aqueous electrolyte is 0.005% to 11%.

Further, the mass percent of the second additive in the non-aqueous electrolyte is 0.005% to 10%.

Still further optionally, the mass percent of the second additive in the non-aqueous electrolyte is 0.05% to 5%.

By adding the second additive into the non-aqueous electrolyte, an SEI film rich in inorganic compounds can be formed on the negative electrode, thereby not only improving the fast-charge performance of the secondary battery, but also further improving the cycle performance of the secondary battery.

In some embodiments, a volume median diameter Dᵥ₅₀ of the negative active material is greater than or equal to 6 µm. Dᵥ₅₀ represents a particle diameter corresponding to a cumulative volume distribution percentage 50% in a volume-based particle size distribution curve of a substance or material.

Optionally, the volume median diameter Dᵥ₅₀ of the negative active material is 6 µm to 20 µm.

Further optionally, the volume median diameter Dᵥ₅₀ of the negative active material is 15 µm to 20 µm.

By controlling the particles of the negative active material to possess a relatively large particle diameter, the contact area between the negative electrode material and the electrolyte solution can be reduced, and the probability of side reactions between the negative electrode material and the solvent on the negative electrode surface can be reduced, thereby reducing the expansion rate of the electrode plate, and improving the cycle performance of the battery cell.

In some embodiments, a BET specific surface area of the negative active material is 0.5 m²/g to 2.0 m²/g.

Optionally, the BET specific surface area of the negative active material is 0.8 m²/g to 1.5 m²/g.

By controlling the particles of the negative active material to possess a specified specific surface area, the surface area of the negative electrode material can be reduced, thereby reducing the contact area between the negative electrode material and the electrolyte solution, and in turn, reducing the side reactions of the solvent on the negative electrode surface, and improving the cycle performance of the battery cell.

In some embodiments, the graphite material includes one or more of artificial graphite or natural graphite; and optionally, the graphite material includes artificial graphite.
In some embodiments, a mass percent of the graphite material in the negative active material is greater than or equal to 50%; optionally, the mass percent of the graphite material in the negative active material is greater than or equal to 80%; and further optionally, the mass percent of the graphite material in the negative active material is 100%.

In some embodiments, the secondary battery is a lithium-ion secondary battery.

According to a second aspect, this application provides an electrical device. The electrical device includes the secondary battery according to the first aspect of this application.

The details of one or more embodiments of this application are set forth in the drawings and description below. Other features, objectives, and advantages of this application will become evident in the specification, drawings, and claims.

### BRIEF DESCRIPTION OF DRAWINGS

In order to more clearly describe and illustrate some embodiments or examples of this application disclosed herein, reference may be made to one or more drawings. Additional details or examples used to describe the drawings are not to be considered as any limitation on the scope of any one of the application disclosed herein, an embodiment or example currently being described, or a preferred implementation of this application currently being understood. In all the drawings, the same reference numeral represents the same component. In the drawings:
FIG. 1 is a schematic diagram of a secondary battery according to an embodiment of this application;
FIG. 2 is an exploded view of the secondary battery shown in FIG. 1 according to an embodiment of this application; and
FIG. 3 is a schematic diagram of an electrical device that uses a secondary battery as a power supply according to an embodiment of this application.

List of reference numerals:
5. secondary battery; 51. housing; 52. electrode assembly; 53. cover plate; 6. electrical device.

### DETAILED DESCRIPTION OF EMBODIMENTS

The following describes in detail a secondary battery and an electrical device according to some embodiments of this application with due reference to drawings. However, unnecessary details may be omitted in some cases. For example, a detailed description of a well-known matter or repeated description of an essentially identical structure may be omitted. That is intended to prevent the following descriptions from becoming unnecessarily lengthy, and to facilitate understanding by a person skilled in the art. In addition, the drawings and the following descriptions are intended for a person skilled in the art to thoroughly understand this application, but not intended to limit the subject-matter set forth in the claims.

A value "range" disclosed herein is defined in the form of a lower limit and an upper limit. A given range is defined by a lower limit and an upper limit selected. The selected lower and upper limits define the boundaries of a particular range. A range so defined may be inclusive or exclusive of the end values. Any end value may be independently included or excluded, and may be arbitrarily combined. In other words, a lower limit of any range may be arbitrarily combined with an upper limit of another range to form a range. For example, if a given parameter falls within a range of 60 to 120 and a range of 80 to 110, it is expectable that the parameter may fall within a range of 60 to 110 and a range of 80 to 120 as well. In addition, if lower-limit values 1 and 2 are listed, and if upper-limit values 3, 4, and 5 are listed, the following ranges are all expectable: 1 to 3, 1 to 4, 1 to 5, 2 to 3, 2 to 4, and 2 to 5. Unless otherwise specified herein, a numerical range "a to b" is a brief representation of a combination of any real numbers between a and b inclusive, where both a and b are real numbers. For example, a value range "0 to 5" herein means all real numbers recited between 0 and 5 inclusive, and the expression "0 to 5" is just a notation of a combination of such numbers. In addition, a statement that a parameter is an integer greater than or equal to 2 is equivalent to a disclosure that the parameter is an integer such as 2, 3, 4, 5, 6, 7, 8, 9, 10, 11, 12, and so on. For example, a statement that a parameter is an integer selected from 2 to 10 is equivalent to reciting integers 2, 3, 4, 5, 6, 7, 8, 9, and 10.

Unless otherwise expressly specified herein, any embodiments and optional embodiments hereof may be combined with each other to form a new technical solution.

Unless otherwise expressly specified herein, all steps described herein may be performed in sequence or at random, and preferably in sequence. For example, that the method includes steps (a) and (b) indicates that the method may include steps (a) and (b) performed in sequence, or steps (b) and (a) performed in sequence. For example, that the method may further include step (c) indicates that step (c) may be added into the method in any order. For example, the method may include steps (a), (b), and (c), or may include steps (a), (c), and (b), or may include steps (c), (a), and (b), and so on.

Unless otherwise expressly specified herein, the terms "contain", "include", "encompass", and "comprise" mentioned herein each independently mean open-ended inclusion, or closed-ended inclusion. For example, the terms "include" and "comprise" may mean inclusion of other members or time sequence features that are not recited, or inclusion of only the recited members or time sequence features. For example, members are materials or constituents, structures, components, instruments, and the like. Non-restrictive examples of time sequence features include actions, conditions of occurrence of actions, timing, status, and the like.

Unless otherwise expressly specified, the term "or" used herein is inclusive. For example, the expression "A or B" means "A alone, B alone, or both A and B". More specifically, all and any of the following conditions satisfy the condition "A or B": A is true (or existent) and B is false (or absent); A is false (or absent) and B is true (or existent); and, both A and B are true (or existent).

In this application, unless otherwise specified, A (such as B) means that B is a non-restrictive example of A, and it is understood that A is not limited to B.

In this application, unless otherwise specified, the features or technical solutions corresponding to "and/or" include any one of the two or more related listed items, and also include any and all combinations of the related listed items. "Any and all combinations" include combinations of any two of the related listed items, any more of the related listed items, or all of the related listed items. For example, "A and/or B" means a group consisting of A, B, and "a combination of A and B". In such terms, "including A and/or B" may mean "including A, including B, and including A and B", and may also mean "including A, including B, or including A and B", which needs to be understood properly according to the context.

Unless otherwise expressly defined, references to "a plurality of", "multiple", and the like herein mean that the number is greater than 2 or equal to 2. For example, "one or more" means one, or greater than or equal to two. Understandably, references to "any multiple" items mean a combination of any appropriate number of items. In other words, "any multiple" items are combined in a non-conflicting manner that enables implementation of this application.

As used herein, "combination thereof", "any combination thereof", "any combinations thereof", and the like include all appropriate combinations of any two or more of the listed items.

In this application, the "appropriate" mentioned in "appropriate combinations", "appropriate manner", "any appropriate manner", and the like mean being appropriate to a degree as long as the technical solution hereof can be implemented.

In this application, "preferred", "preferable", and "better" are merely intended to describe an embodiment or example of better effects, but, understandably, do not constitute any limitation on the scope of protection of this application. Unless otherwise expressly specified, if "preferred" is used repeatedly in one technical solution, each "preferred" is independent to the extent that no contradiction or mutual constraint occurs.

In this application, "optionally" and "optional" mean presence or absence of the related item, that is, indicate any one of two parallel technical solutions "with" or "without" the related item. Unless otherwise expressly specified, if "optional" is used repeatedly in one technical solution, each "optional" is independent to the extent that no contradiction or mutual constraint occurs.

In this application, "further", "still further", "especially", and the like are merely for ease of description and indicate differences in the detailed content, but are in no way understood as any limitation on the scope of protection of this application in any way.

In this application, in "first aspect", "second aspect", and the like, the terms such as "first" and "second" are merely for ease of description, but are in no way understood as indicating or implying relative importance or a quantity or as implicitly specifying the importance or quantity of the technical features mentioned. Moreover, "first", "second", and the like are merely an enumeration or description that is not exhaustive, and understandably, do not constitute a closed limitation on the quantity.

In this application, when a value range is accompanied with a unit, if the right endpoint alone of the value range is accompanied with the unit, then the unit of the left endpoint is the same as the unit of the right endpoint. For example, 3~5 h and 3 to 5 h both mean that the units of the left endpoint "3" and the right endpoint "5" are both h (hours).

The mass or weight of the related constituents mentioned in the specification hereof not only indicates the content of each constituent, but also indicates the mass or weight ratio between the constituents. Therefore, scaling up or down the content of the related constituents specified in the specification hereof still falls within the protection scope of the disclosure made in the specification hereof. Further, the mass or weight described in the specification hereof may be in units such as µg, mg, g, kg, and the like that are well known in the chemical industry.

The evolution of technology and society imposes higher comprehensive requirements on the fast-charge performance, cycle performance, safety performance, and other performance of the secondary batteries. An electrolyte solution exerts a significant effect on the implementation of the above overall performance of the secondary battery. Compared with other types of ester solvents, the chain carboxylate exhibits a lower coagulation point and a lower viscosity, and can significantly enhance the electrical conductivity of the battery and improve the low-temperature performance and cycle stability of the battery. However, the stability of an interface between the chain carboxylate and a negative electrode is relatively low, thereby aggravating not only the expansion of the electrode plate itself but also the gas production at the interface, and resulting in fast fading of the capacity of the battery cell and deterioration of the cycle performance of the battery. In addition, after this type of electrolyte solution is cycled for a long time, especially in high-temperature and high-pressure environments, the expansion of the electrode plate will deteriorate, thereby drastically impairing the service life of the battery cell and even posing safety hazards.

In view of the above typical technical problems, according to a first aspect, this application provides a secondary battery. The secondary battery includes a positive electrode plate, a negative electrode plate, and a non-aqueous electrolyte. The negative electrode plate includes a negative active material layer. The negative active material layer includes a negative active material. The negative active material includes a graphite material. The non-aqueous electrolyte includes a solvent. The solvent includes a first solvent. The first solvent is chain carboxylate.

An OI value of the negative electrode plate, a resistance value R of the negative electrode plate, and a mass percent W₀ of the first solvent in the solvent satisfy the following relation: 0.08/mΩ ≤ W₀ × 100/(R × OI) ≤ 5/mΩ.

The OI value of the negative electrode plate means a ratio of an intensity of a 004 crystal plane diffraction peak to an intensity of a 110 crystal plane diffraction peak of the graphite material, and R is in units of mΩ.

In this application, unless otherwise specified, an electrode plate may be a positive electrode plate or a negative electrode plate. The "active material" in the electrode plate means a material that enables reversible intercalation and deintercalation of active ions. Unless otherwise specified, a "negative active material" means a material applied in a negative electrode plate and enabling reversible intercalation and deintercalation of active ions, and a "positive active material" means a material applied in a positive electrode plate and enabling reversible deintercalation and intercalation of active ions. When a secondary battery is being charged, active ions are deintercalated from the positive electrode, pass through an electrolyte, and are then intercalated into the negative electrode. When the secondary battery is being discharged, the active ions are deintercalated from the negative electrode and intercalated into the positive electrode. The active ions are not particularly limited herein, and may be lithium ions. When the active ions are lithium ions, the secondary battery is a lithium-ion secondary battery.

In this application, "active material" and "active substance" have the same meaning and can be used interchangeably; "positive active substance" and "positive active material" have the same meaning and can be used interchangeably; "negative active substance" and "negative active material" have the same meaning and can be used interchangeably.

In this application, unless otherwise specified, the "active material layer" includes a positive active material layer of a positive electrode plate and a negative active material layer of a negative electrode plate, and, depending on the specific circumstance, may mean the positive active material layer alone or the negative active material layer alone. Understandably, the positive active material layer includes a positive active material, and the negative active material layer includes a negative active material.

In this application, the OI value of the negative electrode plate bears a meaning well known in the art. The OI value of the negative electrode plate means a ratio of the intensity of the 004 crystal plane diffraction peak to the intensity of the 110 crystal plane diffraction peak of a graphite material in the negative active material layer, and can be used for representing the orientation of the negative active material layer and can reflect the degree of anisotropy of crystal grain arrangement in the negative active material layer. The 004 crystal plane corresponds to graphite with a layer structure parallel to the electrode plate, and the 110 crystal plane corresponds to graphite with a layer structure perpendicular to the electrode plate. A smaller OI value makes it more convenient to diffuse the active ions (such as lithium ions) and reduce the expansion of the electrode plate. The intensity of the 004 crystal plane diffraction peak and the intensity of the 110 crystal plane diffraction peak may be measured by an X-ray powder diffractometer (for example but without limitation, X'pert PRO). An X-ray diffraction pattern is obtained in accordance with the *General Rules for X-Ray Diffractometry* and the method for determining lattice parameters of graphite specified in JIS K 0131 -1996 and JB/T4220-2011, and then a ratio of the intensity of the 004 crystal plane diffraction peak to the intensity of the 110 crystal plane diffraction peak of the negative active material layer is calculated as OI = I₀₀₄/I₁₁₀, where I₀₀₄ is the intensity of the 004 crystal plane diffraction peak, and I₁₁₀ is the intensity of the 110 crystal plane diffraction peak.

In some embodiments, the OI value of the negative electrode plate may be adjusted by, but without being limited to, adjusting at least one of the following parameters: the OI value of the graphite particles, a particle diameter (such as Dᵥ₅₀) of the graphite particles, a porosity of the negative electrode plate, a compaction density of the negative electrode plate, type and content of constituents of the negative electrode plate, and the like. This is practicable for a person skilled in the art.

In this application, the resistance value R of the negative electrode plate bears a meaning well known in the art. Unless otherwise specified, R in this application may be measured by using a resistance meter, for example, by using a BER1300 versatile electrode plate resistance meter. Further, the resistance value may be measured by the following method: cutting a negative electrode plate into specimens of a specified size (for example, small discs with a diameter of 40 mm); placing a specimen between two probes of a resistance meter (such as BER1300 versatile electrode plate resistance meter), recording the measured resistance value, measuring a plurality of specimens (such as at least 5 specimens), averaging out the measured values of the specimens, and using the average value as a measurement result of the resistance value R of the negative electrode plate.

In this application, "chain carboxylate" bears a meaning well known in the art. The chain carboxylate is a type of carboxylate organic compound that contains an ester group (-C(=O)-O-) structure but contains no ring structure. In this application, the chain carboxylate functions as a solvent, denoted as a first solvent. Understandably, the -C(=O)-O- is flanked by chain structures rather than ring structures. The -C(=O)-O- itself does not participate in forming a ring. Understandably, the chain carboxylate is in a liquid state in the battery cell.

By comprehensively controlling the OI value of the negative electrode plate and the mass percent W₀ of the chain carboxylate solvent in the specified solvent, the secondary battery can be superior in fast-charge performance, cycle performance, and safety performance concurrently. When the OI value and W₀ satisfy the above relationship 0.08/mΩ ≤ W₀ × 100/(R×OI) ≤ 5/mΩ, on the one hand, the chain carboxylate in the non-aqueous electrolyte assumes characteristics of a low viscosity and conductivity, thereby significantly enhancing the electrical conductivity of the battery, and improving the low-temperature performance and cycle stability of the battery. On the other hand, the orientation index of the negative electrode plate is appropriate, and the direction selectivity is appropriate during intercalation of active ions (such as lithium ions), so that the intercalation expansion of the active ions (such as lithiation expansion) can be dispersed to different directions, thereby reducing the cycle expansion of the electrode plate and the battery cell, effectively alleviating the problem that the expansion of the electrode plate is aggravated by poor stability of the interface between the chain carboxylate and the negative electrode, enhancing safety of the battery, and alleviating the concentration polarization of the active ions during transmission in the negative electrode plate. Such characteristics combined with an appropriate resistance value R of the negative electrode plate can enhance the fast-charge capability of the battery significantly. Therefore, by comprehensively controlling the OI value, R, and W₀, the secondary battery can exhibit superior overall performance in terms of fast-charge performance, cycle performance, and safety performance, and achieve a short fast-charge time, a low cycle expansion rate, and a high cycle capacity retention rate concurrently.

In this application, a relatively large value of W₀ × 100/(R×OI) is conducive to the fast-charge capability of the battery. However, if the value is unduly large, the expansion of the electrode plate itself will be severe, thereby deteriorating the cycle performance and safety performance of the battery cell drastically. An unduly large value of W₀ × 100/(R×OI) may cause detachment of an active material from the electrode plate, and make the battery cell fail to work.

In some embodiments, the OI value satisfies: 6 ≤ OI ≤ 25; optionally, 6 ≤ OI ≤ 18; and further optionally, 12 ≤ OI ≤ 18. The OI value of the negative electrode plate may be any one of the following values or a value falling within a range formed by any two of the following values: 6, 7, 8, 9, 10, 11, 12, 13, 14, 15, 16, 17, 18, 19, 20, 21, 22, 23, 24, 25, and so on. The OI value of the negative electrode plate may fall within any one of the following ranges: 6 to 15, 12 to 25, 6 to 18, 14 to 16, and so on.

The QI value adjusted to fall within an appropriate range is conducive to reducing the directional selectivity during intercalation of the active ions, so that the intercalation expansion of the active ions can be more dispersive in different directions, and the active ion transmission performance of the negative electrode plate can be improved more effectively.

In some embodiments, 1 mΩ ≤ R ≤ 50 mΩ; optionally, 5 mΩ ≤ R ≤ 30 mΩ; and further optionally, 10 mΩ ≤ R ≤ 20 mΩ. The resistance value R of the negative electrode plate may be any one of the following values or a value falling within a range formed by any two of the following values: 1 mΩ, 2 mΩ, 3 mΩ, 4 mΩ, 5 mΩ, 6 mΩ, 8 mΩ, 10 mΩ, 12 mΩ, 15 mΩ, 16 mΩ, 8 mΩ, 20 mΩ, 25 mΩ, 30 mΩ, 35 mΩ, 40 mΩ, 45 mΩ, 50 mΩ, and so on. The resistance value R of the negative electrode plate may fall within any one of the following ranges: 12 mΩ to 18 mΩ, 14 mΩ to 16 mΩ, 5 mΩ to 20 mΩ, 5 mΩ to 18 mΩ, 10 mΩ to 18 mΩ, and so on.

In some embodiments, the resistance value R of the negative electrode plate may be adjusted by, but without being limited to, adjusting the compaction density of the negative electrode plate, porosity of the negative electrode plate, type and content of constituents of the negative electrode plate, and the like. For example, the type and/or content of a conductive agent in the negative electrode plate may be adjusted to adjust the resistance value R of the negative electrode plate.

By controlling the resistance value R of the negative electrode plate to fall within the specified range, the value of W₀×100/(R×OI) can be controlled to fall within a more appropriate range, thereby achieving better comprehensive effects in terms of a short fast-charge time, and a low cycle expansion rate, and a high cycle capacity retention rate, and improving the active ion transmission performance and electronic conductivity of the negative electrode plate.

In this application, the mass percent of the first solvent in the specified solvent is denoted as W₀.

In some embodiments, 10% ≤ W₀ ≤ 80%. W₀ may be any one of the following percentages: 10%, 20%, 30%, 40%, 50%, 60%, 70%, 80%, and so on, or may fall within a range formed by any two of the above percentages, for example, 20% ≤ W₀ ≤ 80%, 30% ≤ W₀ ≤ 70%, 50% ≤ W₀ ≤ 70%, 10% ≤ W₀ ≤ 60%, 20% ≤ W₀ ≤ 60%, and the like.

By controlling the mass percent W₀ of the chain carboxylate (first solvent) in the specified solvent to fall within the specified range, the secondary battery can achieve a higher electrical conductivity in addition to superior performance in terms of fast-charge performance, cycle performance, and safety performance concurrently, and can be improved in terms of the low-temperature performance and cycle stability.

In some embodiments, 0.67 ≤ W₀ × 100/OI ≤ 10. The value of W₀ × 100/OI may be any one of the following values or a value falling within a range formed by any two of the following values: 0.67, 0.8, 1, 1.2, 1.3, 1.33, 1.33±0.01, 1.4, 1.5, 2, 2.5, 2.67, 2.67±0.01, 3, 4, 4.5, 4.67, 4.67±0.01, 5, 5.33, 5.33±0.01, 6, 7, 8, 9, 10, and the like.

In some embodiments, 1 ≤ W₀ × 100/OI ≤ 10, optionally 1 ≤ W₀ × 100/OI ≤ 5, and further optionally, 3 ≤ W₀ × 100/OI ≤ 5.

In some embodiments, 0.67/mΩ ≤ W₀ × 100/OI ≤ 4, and optionally 1 ≤ W₀ × 100/OI ≤ 4.

On the basis of controlling the value of W₀ × 100/(R × OI) to satisfy the above relationship, the value of W₀ × 100/OI is controlled appropriately to further implement coordination between the chain carboxylate in the non-aqueous electrolyte and the crystal grain arrangement direction in the negative active material layer, thereby making it easier to enhance the overall performance in terms of fast-charge performance, cycle performance, and safety performance.

In this application, the secondary battery is characterized by: 0.08/mΩ ≤ W₀ × 100/(R × OI) ≤ 5/mΩ. For the secondary battery provided in this application, the value of W₀ × 100/(R×OI) may be any one of the following values or a value falling within a range formed by any two of the following values: 0.1/mΩ, 0.13/mΩ, 0.15/mΩ, 0.2mΩ, 0.3/mΩ, 0.4/mΩ, 0.5/mΩ, 0.6/mΩ,.8/mΩ, 1/mΩ, 1.2/mΩ, 1.4/mΩ, 1.5/mΩ, 1.6/mΩ, 1.8/ mΩ, 2/mΩ, 2.2/mΩ, 2.4/mΩ, 2.5/mΩ, 2.6/mΩ, 2.8/mΩ, 3/mΩ, 3.5/mΩ, 3.6/mQ, 3.8/mΩ, 4/mΩ, 4.5/mΩ, 4.8/mΩ, 5/mΩ, and the like.

In some embodiments, 0.1/mΩ ≤ W₀ × 100/(R × OI) ≤ 5/mΩ.

In some embodiments, 0.1/mΩ ≤ W₀ × 100/(R × OI) ≤ 2/mΩ.

On the basis of comprehensively controlling the orientation index of the negative electrode plate and the mass percent of the first solvent (chain carboxylate) in the specified solvent, the resistance value R of the negative electrode plate is further controlled comprehensively, so as to control the value of W₀ × 100/(R×OI) to fall within an appropriate range, and achieve better overall performance in terms of fast-charge performance, cycle performance, and safety performance of the secondary battery.

In some embodiments, the secondary battery satisfies a combination of the following characteristics: 6 ≤ OI ≤ 18, 10 mΩ ≤ R ≤ 20 mΩ, and 20% ≤ W₀ ≤ 80%. In some embodiments, 12 ≤ OI ≤ 18, 10 mΩ ≤ R ≤ 20 mΩ, and 10% ≤ W₀ ≤ 60%.

By finely and comprehensively controlling the OI value of the negative electrode plate to be 12 to 18, controlling the resistance value R of the negative electrode plate to be 10 mΩ to 20 mΩ, and controlling the mass percent W₀ of the chain carboxylate solvent in the specified solvent to be 20% to 80% (further optionally 10% to 60%), the secondary battery can be superior in fast-charge performance, cycle performance, and safety performance concurrently, and can achieve a high fast-charge capability, a low cycle expansion rate, and a high cycle capacity retention rate concurrently.

In some embodiments, 12 ≤ OI ≤ 18, 10 mΩ ≤ R ≤ 20 mΩ, and 20% ≤ W₀ ≤ 60%.

In some embodiments, 12 ≤ OI ≤ 18, 10 mΩ ≤ R ≤ 20 mΩ, and 50% ≤ W₀ ≤ 70%.

By controlling the values of different parameters, the secondary battery can be superior in one or more aspects. For example, in a case that the parameters satisfy 12 ≤ OI ≤ 18, 10 mΩ ≤ R ≤ 20 mΩ, and 20% ≤ W₀ ≤ 60%, the secondary battery can achieve a low cycle expansion rate and high cycle performance that are significantly excellent on the basis of superior overall performance. For another example, in a case that the parameters satisfy 12 ≤ OI ≤ 18, 10 mΩ ≤ R ≤ 20 mΩ, and 50% ≤ W₀ ≤ 70%, the secondary battery is significantly superior in a short fast-charge time and a low cycle expansion rate on the basis of superior overall performance.

In some embodiments, the first solvent includes a compound represented by Formula (1):

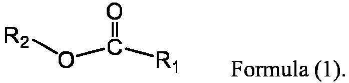

In the formula above, R₁ and R₂ each independently are alkyl or haloalkyl. Evidently, R₁ and R₂ do not form a ring, and the compound represented by Formula (1) is a chain carboxylate.

Optionally, R₁ and R₂ each independently are C₁ to C₃ alkyl or C₁ to C₃ haloalkyl.

Optionally, R₁ and R₂ each independently are C₁ to C₃ alkyl or C₁ to C₃ fluoroalkyl.

The C₁ to C₃ alkyl may be methyl (denoted as Me, -CH₃), ethyl (denoted as Et, -CH₂CH₃), or propyl. The propyl may be n-propyl (denoted as 1-propyl, n-Pr, n-propyl, -CH₂CH₂CH₃), or isopropyl (denoted as 2-propyl, i-Pr, i-propyl, -CH(CH₃)₂). Further, the C₁ to C₃ alkyl may be methyl, ethyl, or n-propyl. Still further, the C₁ to C₃ alkyl may be methyl or ethyl.

The C₁ to C₃ haloalkyl may contain 1, 2, or 3 carbon atoms, that is, may be a C₁ haloalkyl, a C₂ haloalkyl, or a C₃ haloalkyl. The halogen atom in the C₁ to C₃ haloalkyl may be fluorine. The number of halogen atoms in the C₁ to C₃ haloalkyl may be 1 or more. When the number of halogen atoms in the C₁ to C₃ haloalkyl is plural, the number of halogen atoms may be 2 or as many as all the hydrogen atoms in the alkyl are replaced.

The C₁ to C₃ fluoroalkyl may contain 1, 2, or 3 carbon atoms, that is, may be a C₁ fluoroalkyl, a C₂ fluoroalkyl, or a C₃ fluoroalkyl. The number of fluorine atoms in the C₁ to C₃ fluoroalkyl may be 1 or more. When the number of fluorine atoms in the C₁ to C₃ fluoroalkyl is plural, the number of fluorine atoms may be 2 or as many as the alkyl is perfluorinated.

In some embodiments, R₁ and R₂ each independently are one of methyl, ethyl, propyl, fluoromethyl, fluoroethyl, or fluoropropyl. Optionally, R₁ and R₂ each independently are one of methyl, ethyl, fluoromethyl, or fluoroethyl. The number of fluorine atoms in the fluoromethyl may independently be 1, 2, or 3. The number of fluorine atoms in the fluoroethyl may independently be 1, 2, 3, 4, 5, or 6, and further, may independently be 1, 2, or 3. The number of fluorine atoms in the fluoropropyl may independently be 1, 2, 3, 4, 5, 6, 7, 8, or 9, and further, may independently be 1, 2, or 3.

The first solvent with a relatively small molecular size may be selected. In this case, the viscosity of the first solvent is relatively low, thereby endowing the secondary battery with higher fast-charge performance.

In some embodiments, the first solvent includes one or more of the following compounds, and may be one or more selected from the following compounds: CH₃CH₂-OC(=O)-CH₃ (that is, ethyl acetate), CH₃-OC(=O)-CH₃ (that i, methyl acetate), CH₃CH₂-OC(=O)-CH₂CH₃ (that is, ethyl propionate), CH₃-OC(=O)-CH₂CH₃ (that is, methyl propionate), CH₃CH₂-OC(=O)-CH₂F, CH₃CH₂-OC(=O)-CHF₂, CH₃CH₂-OC(=O)-CF₃, CH₃-OC(=O)-CH₂F, CH₃-OC(=O)-CHF₂, CH₃-OC(=O)-CF₃, CF₃-OC(=O)-CH₃, or CHF₂-OC(=O)-CH₃.

In other words, the first solvent includes one or more of the following compounds, and may be one or more selected from the following compounds:

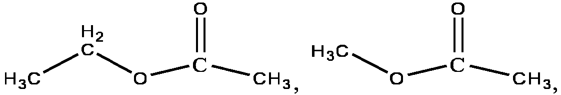

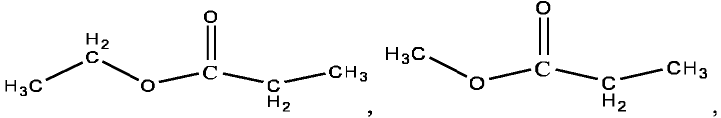

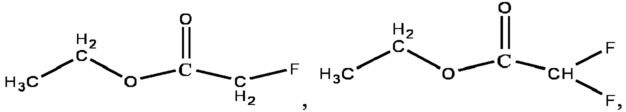

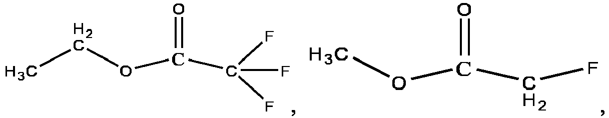

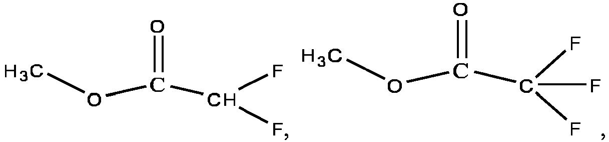

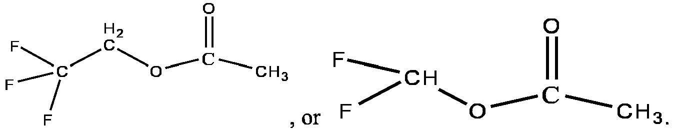

In some embodiments, the first solvent includes one or more of the following compounds: methyl acetate, ethyl acetate, methyl difluoroacetate, or ethyl difluoroacetate. In some embodiments, the first solvent is one or more selected from the following compounds: methyl acetate, ethyl acetate, methyl difluoroacetate, or ethyl difluoroacetate.

In some embodiments, the non-aqueous electrolyte further includes a first additive. The first additive is diisocyanate.

In this application, diisocyanate means a compound containing two isocyanate groups (-NCO).

The dosage of the chain carboxylate (the first solvent) improves the fast-charge capability of the battery. However, due to the factor of compatibility between the carboxylate and the negative electrode plate, if the mass percent W₀ of the chain carboxylate, the OI value, and the resistance value R of the negative electrode plate are not well matched, the expansion of the negative electrode plate itself may be aggravated, the gas production at the interface may be aggravated, and the capacity fading of the battery cell and the cycle performance of the battery may be deteriorated. By adding the additive diisocyanate (denoted as a first additive) into the non-aqueous electrolyte, a protective solid electrolyte interface (SEI) layer can be formed on the surface of the negative electrode plate. This protective layer can assist active ions in being intercalated into the negative active material layer of the negative electrode plate. In this way, the intercalation expansion effect of the active ions of the negative electrode plate can be evenly conducted in all directions, thereby reducing the cycle expansion rate of the negative electrode plate. In addition, the first additive can also significantly improve the stability of the interface between an electrolyte solution and a negative electrode plate, alleviate depletion of the electrolyte solution and damage to the negative electrode structure during cycling of the secondary battery, and in turn, significantly improve the cycle performance of the secondary battery.

In some embodiments, the first additive includes a compound with the following structure:

O=C=N-R₃-N=C=O Formula (2).

In the formula above, R₃ is an unsubstituted or Ra-substituted C₁ to C₁₈ alkylene; Ra may include one or more of the following substituents, and may be one or more selected from the following substituents: halogen atom (which may be one or more of fluorine, chlorine, bromine, or iodine, and further, may be fluorine), -CN, -NCO, -OH, -COOH, -SOOH, -OC(=O)R₁₁, R₁₂OC(=O)-, C₁ to C₁₀ alkyl, C₂ to C₁₀ alkenyl, C₂ to C₁₀ alkynyl, or C₂ to C₁₀ oxaalkyl; and R₁₁ and R₁₂ each independently are alkyl or haloalkyl. Unless otherwise specified, in a case of "Ra-substituted", the number of Ra atoms may be 1 or more.

In the substituent Ra, R₁₁ and R₁₂ each independently are alkyl or haloalkyl. Optionally, R₁₁ and R₁₂ each independently are C₁ to C₃ alkyl or C₁ to C₃ haloalkyl. Further optionally, R₁₁ and R₁₂ each independently are C₁ to C₃ alkyl or C₁ to C₃ fluoroalkyl.

In some embodiments, R₁₁ and R₁₂ each independently are one of methyl, ethyl, propyl, fluoromethyl, fluoroethyl, or fluoropropyl. Optionally, R₁₁ and R₁₂ each independently are one of methyl, ethyl, fluoromethyl, or fluoroethyl. The number of fluorine atoms in the fluoromethyl may independently be 1, 2, or 3. The number of fluorine atoms in the fluoroethyl may independently be 1, 2, 3, 4, 5, or 6, and further, may independently be 1, 2, or 3. The number of fluorine atoms in the fluoropropyl may independently be 1, 2, 3, 4, 5, 6, 7, 8, or 9, and further, may independently be 1, 2, or 3.

In some embodiments, on the basis of "R₃ is an unsubstituted or Ra-substituted C₁ to C₁₈ alkylene", the number of carbon atoms in "C₁ to C₁₈ alkylene" is 1 to 16. Further, the number of carbon atoms in "C₁ to C₁₈ alkylene" may be any one of the following values or a value falling within a range formed by any two of the following values: 1, 2, 3, 4, 5, 6, 7, 8, 9, 10, 11, 12, 13, 14, 15, or 16. The range formed by any two of the values may be, for example, 1 to 16, 2 to 16, 4 to 16, 6 to 16, 1 to 14, 2 to 14, 4 to 14, 6 to 14, 1 to 10, 2 to 10, 4 to 10, 6 to 10, or the like.

In some embodiments, on the basis of "R₃ is an unsubstituted or Ra-substituted C₁ to C₁₈ alkylene", the number of carbon atoms in R₃ is 1 to 16. Further, the number of carbon atoms in R₃ may be any one of the following values or a value falling within a range formed by any two of the following values: 1, 2, 3, 4, 5, 6, 7, 8, 9, 10, 11, 12, 13, 14, 15, or 16. The range formed by any two of the values may be, for example, 1 to 16, 2 to 16, 4 to 16, 6 to 16, 1 to 14, 2 to 14, 4 to 14, 6 to 14, 1 to 10, 2 to 10, 4 to 10, 6 to 10, or the like.

In some embodiments, R₃ is unsubstituted or Ra-substituted C₂ to C₁₀ alkylidene, unsubstituted or Ra-substituted C₃ to C₁₈ divalent cycloalkyl, or unsubstituted or Ra-substituted C₆ to C₁₈ arylene. Optionally, R₃ is C₂ to C₁₀ alkylidene, C₆ to C₁₈ divalent cycloalkyl, or C₆ to C₁₈ arylene. Further optionally, R₃ is C₄ to C₁₀ alkylidene, C₆ to C₁₄ divalent cycloalkyl or C₆ to C₁₄ arylene. Still further optionally, R₃ is C₄ to C₁₀ alkylidene, C₆ to C₁₀ divalent cycloalkyl or C₆ to C₁₀ arylene. Still further optionally, R₃ is a C₄ to C₈ hexylidene, C₆ to C₁₀ divalent cycloalkyl containing a hexyl ring, or C₆ to C₁₀ arylene containing a benzene ring.

In some embodiments, Ra is one or more selected from the following substituents: halogen atom (which may be one or more of fluorine, chlorine, bromine, or iodine, and further, may be fluorine), - CN, -NCO, -OH, -COOH, -SOOH, -OC(=O)R₁₁, R₁₂OC(=O)-, C₁ to C₁₀ alkyl, C₂ to C₁₀ alkenyl, C₂ to C₁₀ alkynyl, or C₂ to C₁₀ oxaalkyl. In some embodiments, Ra is one or more selected from the following substituents: halogen atom (which may be one or more of fluorine, chlorine, bromine, or iodine, and further, may be fluorine), -CN, -NCO, -OH, -COOH, -SOOH, -OC(=O)R₁₁, R₁₂OC(=O)-, or C₂ to C₁₀ oxaalkyl.

In some embodiments, Ra is a halogen atom, and may be one or more of fluorine, chlorine, bromine, or iodine, and further, may be fluorine.

In R₃, the number of Ra atoms may be 0, one, or more. When the number of Ra atoms is 0, the "unsubstituted" circumstance applies. When the number of Ra atoms is 1 or more, the "Ra-substituted" circumstance applies.

In some embodiments, in R₃, the number of Ra atoms may be 0. In this case, the number of carbon atoms in R₃ may be as defined above. For example, R₃ is an unsubstituted C₁ to C₁₈ alkylene, an unsubstituted C₁ to C₁₆ alkylene, an unsubstituted C₂ to C₁₄ alkylene, or the like.

In some embodiments, in R₃, the number of Ra atoms may be one or more.

In some embodiments, Ra is a C₁ to C₁₀ alkyl, and further, may be a C₁ to C₃ alkyl, and further, may be methyl or ethyl. In some embodiments, Ra is methyl.

In some embodiments, R₃ is C₂ to C₁₀ alkylidene, C₂ to C₁₀ heteroalkylidene, C₆ to C₁₈ arylene, C₂ to C₁₈ heteroarylene, C₃ to C₁₈ alicyclylene, or C₃ to C₁₈ heteroalicyclylene. Any one of the foregoing groups may be unsubstituted or Ra-substituted. Unless otherwise specified, in the case of "Ra-substituted", the number of Ra atoms may be 1 or more. The C₆ to C₁₈ arylene may be a C₆ to C₁₄ arylene, and further, may be a C₆ to C₁₄ arylene.

Unless a "substituted" circumstance is expressly specified herein, the "unsubstituted" circumstance applies.

The term "hydrocarbon" compound herein means a compound formed by a carbon atom and a hydrogen atom. A hydrocarbon compound may be a saturated structure (that is, saturated hydrocarbon) or an unsaturated structure (that is, unsaturated hydrocarbon); may contain a ring structure (that is, cyclic hydrocarbon) or contain no ring structure (that is, chain hydrocarbon); and may be aromatic (that is, aromatic hydrocarbon or aromatic compound) or non-aromatic (that is, aliphatic hydrocarbon). A hydrocarbon of a saturated structure, that is, a saturated hydrocarbon, may be an alkane or cycloalkane. An alkane contains no ring structure, and may be a linear structure, or may contain a branched chain. The cycloalkane contains a ring structure, and the number of ring structures in the cycloalkane may be 1 or more, such as 1, 2 or 3. The cycloalkane is a saturated hydrocarbon containing a ring structure, and is a non-aromatic hydrocarbon. An aromatic hydrocarbon, also known as arene, contains an aromatic ring structure. The unsaturated hydrocarbon may contain a carbon-carbon double bond, a carbon-carbon triple bond, and the like. The unsaturated hydrocarbon may contain a ring structure or not. Unless otherwise specified, "alkene" means a chain hydrocarbon containing one or more carbon-carbon double bonds; "cycloalkene" means a cyclic hydrocarbon containing one or more carbon-carbon double bonds; "alkyne" means a chain hydrocarbon containing one or more carbon-carbon triple bonds; and "cycloalkyne" means a cyclic hydrocarbon containing one or more carbon-carbon triple bonds. "Alicyclic hydrocarbon" means a non-aromatic hydrocarbon containing a ring structure, and may be saturated or unsaturated. Carbon atoms constituting an unsaturated bond may be ring-forming atoms or not. For example, an alicyclic hydrocarbon may include, but is not limited to, a cycloalkane, a cycloalkene, a cycloalkyne, or the like.

The term "hydrocarbyl" used herein means a monovalent residue derived by removing one hydrogen atom from a hydrocarbon compound that includes a primary (normal) carbon atom, a secondary carbon atom, a tertiary carbon atom, a quaternary carbon atom, or a combination thereof. Phrases containing this term, for example, "C₁ to C₁₀ hydrocarbyl" means a hydrocarbyl containing 1 to 10 carbon atoms, and, in each case of being used herein, may independently be C₁ hydrocarbyl, C₂ hydrocarbyl, C₃ hydrocarbyl, C₄ hydrocarbyl, C₅ hydrocarbyl, C₆ hydrocarbyl, C₇ hydrocarbyl, C₈ hydrocarbyl, C₉ hydrocarbyl, or C₁₀ hydrocarbyl.

The term "alkylene" used herein means a divalent hydrocarbon group containing two monovalent group centers and derived from a hydrocarbon compound by the loss of two hydrogen atoms (or derived from a hydrocarbon group by the loss of one hydrogen atom), and may be a saturated branched chain structure or a saturated linear structure. For example, "C₁ to C₁₀ alkylene" means a group in which the hydrocarbyl moiety contains 1 to 10 carbon atoms, and, in each case of being used herein, may independently be C₁ alkylene, C₂ alkylene, C₃ alkylene, C₄ alkylene, C₅ alkylene, C₆ alkylene, C₇ alkylene, C₈ alkylene, C₉ alkylene, or C₁₀ alkylene.

The term "alkyl" used herein means a monovalent residue derived by removing one hydrogen atom from a saturated hydrocarbon that includes a primary (normal) carbon atom, a secondary carbon atom, a tertiary carbon atom, a quaternary carbon atom, or a combination thereof. In a phrase containing this term, for example, "C₁ to C₁₀ alkyl" means an alkyl containing 1 to 10 carbon atoms, and, in each case of being used herein, may independently be C₁ alkyl, C₂ alkyl, C₃ alkyl, C₄ alkyl, C₅ alkyl, C₆ alkyl, C₇ alkyl, C₈ alkyl, C₉ alkyl, or C₁₀ alkyl. Appropriate examples include, but are not limited to: methyl (Me, -CH₃), ethyl (Et, -CH₂CH₃), 1-propyl (n-Pr, n-propyl, -CH₂CH₂CH₃), 2-propyl (i-Pr, i-propyl, -CH(CH₃)₂), 1-butyl (n-Bu, n-butyl, -CH₂CH₂CH₂CH₃), 2-methyl-1-propyl (i-Bu, i-butyl, -CH₂CH(CH₃)₂), 2-butyl (s-Bu, s-butyl, -CH(CH₃)CH₂CH₃), 2-methyl-2-propyl (t-Bu, t-butyl, -C(CH₃)₃), 1-pentyl (n-pentyl, - CH₂CH₂CH₂CH₂CH₃), 2-pentyl (-CH(CH₃)CH₂CH₂CH₃), 3-pentyl (-CH(CH₂CH₃)₂), 2-methyl-2-butyl (-C(CH₃)₂CH₂CH₃), 3-methyl-2-butyl (-CH(CH₃)CH(CH₃)₂), 3-methyl-1-butyl (-CH₂CH₂CH(CH₃)₂), 2-methyl-1-butyl(-CH₂CH(CH₃)CH₂CH₃), 1-hexyl(-CH₂CH₂CH₂CH₂CH₂CH₃), 2-hexyl(-CH(CH₃)CH₂CH₂CH₂CH₃), 3-hexyl(-CH(CH₂CH₃)(CH₂CH₂CH₃)), 2-methyl-2-pentyl (-C(CH₃)₂CH₂CH₂CH₃), 3-methyl-2-pentyl (-CH(CH₃)CH(CH₃)CH₂CH₃), 4-methyl-2-pentyl (-CH(CH₃)CH₂CH(CH₃)₂), 3-methyl-3-pentyl (-C(CH₃)(CH₂CH₃)₂), 2-methyl-3-pentyl (-CH(CH₂CH₃)CH(CH₃)₂), 2,3-dimethyl-2-butyl (-C(CH₃)₂CH(CH₃)₂), 3,3-dimethyl-2-butyl (-CH(CH₃)C(CH₃)₃, and octyl (-(CH₂)₇CH₃).

The term "alkylidene" used herein means a divalent hydrocarbon group containing two monovalent group centers and derived from an alkane by the loss of two hydrogen atoms (or derived from an alkyl by the loss of one hydrogen atom), and may be a saturated branched chain structure or a saturated linear structure. For example, "C₁ to C₁₀ alkylidene" means a group in which the alkyl moiety contains 1 to 10 carbon atoms, and, in each case of being used herein, may independently be C₁ alkylidene (that is, methylene), C₂ alkylidene (that is, ethylene), C₃ alkylidene (that is, propylene), C₄ alkylidene (that is, butylene), C₅ alkylidene (that is, pentylene), C₆ alkylidene (that is, hexylidene), C₇ alkylidene (that is, heptylidene), C₈ alkylidene (that is, octylidene), C₉ alkylidene (that is, nonylene), or C₁₀ alkylidene (that is, decanylene). Appropriate examples include, but are not limited to: methylene (-CH₂-), 1,1-ethyl (-CH(CH₃)-), 1,2-ethyl (-CH₂CH₂-), 1,1-propyl (-CH(CH₂CH₃)-), 1,2-propyl (-CH₂CH(CH₃)-), 1,3-propyl (-CH₂CH₂CH₂-), and 1,4-butyl (-CH₂CH₂CH₂CH₂-).

The term "alkenyl" used herein means a monovalent residue derived from a chain-structured alkene compound by the loss of one hydrogen atom. This hydrogen atom may be located on a carbon-carbon double bond, or located on an alkyl substituent of the carbon-carbon double bond. In a phrase containing this term, for example, "C₂ to C₁₀ alkenyl" means an alkenyl containing 2 to 10 carbon atoms, and, in each case of being used herein, may independently be C₂ alkenyl, C₃ alkenyl, C₄ alkenyl, C₈ alkenyl, C₆ alkenyl, C₇ alkenyl, C₈ alkenyl, C₉ alkenyl, or C₁₀ alkenyl. Appropriate examples include, but are not limited to: vinyl (CH₂=CH-), allyl (CH₂=CH-CH₂-), CH₃-CH=CH-, and the like.

The term "alkynyl" used herein means a monovalent residue derived from a chain-structured alkyne compound by the loss of one hydrogen atom. This hydrogen atom may be located on a carbon-carbon triple bond, or located on an alkyl substituent of the carbon-carbon triple bond. In a phrase containing this term, for example, "C₂ to C₁₀ alkynyl" means an alkynyl containing 2 to 10 carbon atoms, and, in each case of being used herein, may independently be C₂ alkynyl, C₃ alkynyl, C₄ alkynyl, C₅ alkynyl, C₆ alkynyl, C₇ alkynyl, C₈ alkynyl, C₉ alkynyl, or C₁₀ alkynyl. Appropriate examples include, but are not limited to: ethynyl (CH≡C-), propargyl (CH≡C-CH₂¬-), CH₃-C≡C-, and the like.

The term "heteroalkyl" used herein means a group derived from an alkyl by replacing at least one carbon atom with a heteroatom, where the heteroatom is a non-carbon and non-hydrogen atom and may be, but is not limited to, N atom, O atom, S atom, P atom, or the like. The following description uses O, N, and S as examples. For example, if a carbon atom connected to an adjacent group in an alkyl group is replaced by heteroatoms O, N, and S respectively, then the resulting heteroalkyl groups are alkoxy (for example, -OCH₃), amino (for example, -NHCH₃, -N(CH₃)₂), or thioalkyl (for example, -SCH₃), respectively. If a carbon atom not directly connected to an adjacent group in an alkyl group is replaced by heteroatoms O, N, and S respectively, then the resulting heteroalkyl groups are alkoxyalkyl (for example, -CH₂CH₂-O-CH₃), alkylaminoalkyl (for example, -CH₂NHCH₃, -CH₂N(CH₃)₂, or the like), or alkylthioalkyl (for example, -CH₂-S-CH₃), respectively. If an ending carbon atom of an alkyl group is replaced by a heteroatom, the resulting heteroalkyl group may be hydroxyalkyl (for example, -CH₂CH₂-OH), aminoalkyl (for example, -CH₂NH₂), or mercaptoamino (for example, -CH₂CH₂-SH). In a phrase containing the term "heteroalkyl", for example, "C₁ to C₁₀ heteroalkyl" means an heteroalkyl containing 1 to 10 carbon atoms, and, in each case of being used herein, may independently be C₁ heteroalkyl, C₂ heteroalkyl, C₃ heteroalkyl, C₄ heteroalkyl, C₅ heteroalkyl, C₆ heteroalkyl, C₇ heteroalkyl, C₈ heteroalkyl, C₉ heteroalkyl, or C₁₀ heteroalkyl.

The term "alkoxy" used herein means a monovalent group formed by linking an alkyl group and -O-. In a phrase containing this term, for example, "C₁ to C₁₀ oxaalkyl" means an alkoxy containing 1 to 10 carbon atoms, and, in each case of being used herein, may independently be C₁ alkoxy, C₂ alkoxy, C₃ alkoxy, C₄ alkoxy, C₅ alkoxy, C₆ alkoxy, C₇ alkoxy, C₈ alkoxy, C₉ alkoxy, or C₁₀ alkoxy. Appropriate examples may include, but are not limited to, methoxy (CH₃O-), ethoxy (CH₃CH₂O-), and the like.

The term "oxaalkyl" used herein means an alkyl group in which at least one carbon atom is replaced by an oxygen atom, where the oxygen atom may be located at a linking site of the alkyl group or not. The number of the oxygen atoms may be 1 or more. In an example in which one oxygen atom serves as a substituent, the result of the hybridization alkoxy, alkoxyalkyl, or the like. In a phrase containing this term, for example, "C₁ to C₁₀ oxaalkyl" means an oxaalkyl containing 1 to 10 carbon atoms, and, in each case of being used herein, may independently be C₁ oxaalkyl, C₂ oxaalkyl, C₃ oxaalkyl, C₄ oxaalkyl, C₅ oxaalkyl, C₆ oxaalkyl, C₇ oxaalkyl, C₈ oxaalkyl, C₉ oxaalkyl, or C₁₀ oxaalkyl.

The term "heteroalkylidene" used herein, also called "bivalent heteroalkyl", means a bivalent heterohydrocarbyl containing two monovalent group centers and derived from a heteroalkyl group by the loss of one hydrogen atom (the hydrogen atom may be located on a carbon atom or a heteroatom), or means a group derived from an alkylidene by substituting heteroatoms for at least one carbon atom (any one heteroatom may be located on a linking site of the alkylidene or not), where the heteroatoms may be, but are not limited to, N atom, O atom, S atom, P atom, or the like. In a phrase containing this term, for example, "C₁ to C₁₀ heteroalkylidene" means an heteroalkylidene containing 1 to 10 carbon atoms, and, in each case of being used herein, may independently be C₁ heteroalkylidene, C₂ heteroalkylidene, C₃ heteroalkylidene, C₄ heteroalkylidene, C₈ heteroalkylidene, C₆ heteroalkylidene, C₇ heteroalkylidene, C₈ heteroalkylidene, C₉ heteroalkylidene, or C₁₀ heteroalkylidene.

The term "cycloalkyl" used herein means a monovalent residue derived from a saturated cycloalkane by the loss of one hydrogen atom located on a ring or not on a ring, where the monovalent linking site may be formed directly on the ring or formed at an alkyl substituent position on the ring. In a phrase containing this term, for example, "C₃ to C₁₀ cycloalkyl" means a cycloalkyl containing 3 to 10 carbon atoms, and, in each case of being used herein, may independently be C₃ cycloalkyl, C₄ cycloalkyl, C₈ cycloalkyl, C₆ cycloalkyl, C₇ cycloalkyl, C₈ cycloalkyl, C₉ cycloalkyl, or C₁₀ cycloalkyl. The number of ring structures in the cycloalkyl may be 1 or more, such as 1, 2 or 3. The number of atoms that form a ring in any one ring structure of the cycloalkyl may be 3 to 8, for example, may be 3, 4, 5, 6, 7, or 8, so as to form, for example, a propyl ring 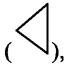 butyl ring 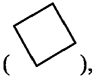 a pentyl ring 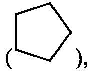 hexyl ring 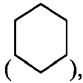 a heptyl ring, or an octyl ring. The circumstances in which the monovalent linking site is formed directly on the ring may include, but are not limited to, cyclopropyl 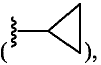 cyclobutyl 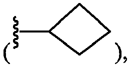 cyclopentyl 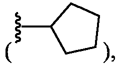 cyclohexyl 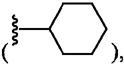 and cycloheptyl. The circumstances in which the monovalent linking site is formed at the alkyl substituent position on the ring may include, but are not limited to, 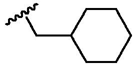 (a C₇ cycloalkyl containing a hexyl ring).

In this application, unless otherwise specified, " 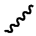 " located at the ending of a structural formula represents a linking site of a covalent bond.

The term "alicyclylene" used herein, also called "divalent alicyclyl", means a divalent residue derived from an alicyclic hydrocarbon by the loss of two hydrogen atoms located on a ring or not on a ring, where any one of the lost hydrogen atoms may be located on the ring or not. In other words, the monovalent linking site may be formed directly on the ring or formed at a hydrocarbyl substituent position on the ring. The alicyclylene may include, but is not limited to, divalent cycloalkyl, divalent cycloalkenyl, divalent cycloalkynyl, and the like. In a phrase containing this term, for example, "C₃ to C₁₀ alicyclylene" means an alicyclylene containing 3 to 10 carbon atoms, and, in each case of being used herein, may independently be C₃ alicyclylene, C₄ alicyclylene, C₅ alicyclylene, C₆ alicyclylene, C₇ alicyclylene, C₈ alicyclylene, C₉ alicyclylene, or C₁₀ alicyclylene.

The term "divalent cycloalkyl" used herein, also called "cycloalkylidene", means a divalent saturated hydrocarbon group containing two monovalent group centers and derived from a cycloalkane by removal of two hydrogen atoms (or derived from a cycloalkyl by the loss of one hydrogen atom), where any one of the monovalent group centers may be independently located on a ring or not. In a phrase containing this term, for example, "C₃ to C₁₀ divalent cycloalkyl" means a divalent cycloalkyl containing 3 to 10 carbon atoms, and, in each case of being used herein, may independently be C₃ divalent cycloalkyl, C₄ divalent cycloalkyl, C₅ divalent cycloalkyl, C₆ divalent cycloalkyl, C₇ divalent cycloalkyl, C₈ divalent cycloalkyl, C₉ divalent cycloalkyl, or C₁₀ divalent cycloalkyl. The number of carbon atoms in the "divalent cycloalkyl" may be 3 to 10, and may be 3, 4, 5, 6, 7, 8, 9, or 10, for example, may be 6 to 10. The number of ring structures in the divalent cycloalkyl may be 1 or more, such as 1, 2 or 3. The number of atoms that form a ring in any one ring structure of the "divalent cycloalkyl" may be 3 to 8, and may be 3, 4, 5, 6, 7, or 8. As a non-restrictive example, "C₆ to C₁₀ divalent cycloalkyl" means a divalent cycloalkyl group containing 6 to 10 carbon atoms, where the number of atoms that form a ring in one ring structure is not particularly limited. "C₆ to C₁₀ divalent cycloalkyl containing a hexyl ring" means a divalent cycloalkyl containing a hexyl ring and 6 to 10 carbon atoms, for example, a divalent cyclohexyl (such as 1,4-position structure 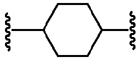 , 1,3-position structure 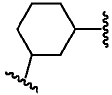 , or 1,2-position structure 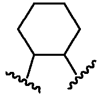 ), 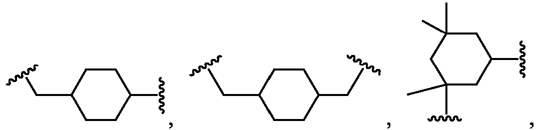 or the like.

The term "divalent cycloalkenyl" used herein, also called "cycloalkenylidene", means a divalent unsaturated hydrocarbon group containing two monovalent group centers and derived from a cycloalkene by removal of two hydrogen atoms, where any one of the monovalent group centers may be independently located on a ring or not. In a phrase containing this term, for example, "C₃ to C₁₀ divalent cycloalkenyl" means a divalent cycloalkenyl containing 3 to 10 carbon atoms, and, in each case of being used herein, may independently be C₃ divalent cycloalkenyl, C₄ divalent cycloalkenyl, C₅ divalent cycloalkenyl, C₆ divalent cycloalkenyl, C₇ divalent cycloalkenyl, C₈ divalent cycloalkenyl, C₉ divalent cycloalkenyl, or C₁₀ divalent cycloalkenyl.

The term "heteroalicyclylene" used herein, also called "divalent heteroalicyclyl", means a group derived from an alicyclylene by replacing the carbon atom in at least one hydrocarbyl position with a heteroatom, where the heteroatom may be located at a linking site of the alicyclylene or not, the heteroatom may be located on a ring or not, and the heteroatom may be, but is not limited to, N atom, O atom, S atom, P atom, or the like. The heteroatom may be located at the linking site (that is, the ending) of the alicyclylene or not. In a phrase containing this term, for example, "C₃ to C₁₀ heteroalicyclylene" means an heteroalicyclylene containing 3 to 10 carbon atoms, and, in each case of being used herein, may independently be C₃ heteroalicyclylene, C₄ heteroalicyclylene, C₅ heteroalicyclylene, C₆ heteroalicyclylene, C₇ heteroalicyclylene, C₈ heteroalicyclylene, C₉ heteroalicyclylene, or C₁₀ heteroalicyclylene.

The term "arylene" used herein means a divalent residue containing two monovalent group centers and derived from an aromatic hydrocarbon by the loss of two hydrogen atoms (any one of the lost hydrogen atoms may be independently located on an aromatic ring or not). The arylene may be a single-ring arylene, a fused-ring arylene, or a polycyclic arylene. For the types of rings in the polycyclic circumstance, at least one of the rings is an aromatic ring. For example, "C₆ to C₁₄ arylene" means an arylene containing 6 to 14 carbon atoms, and, in each case of being used herein, may independently be C₆ arylene, C₇ arylene, C₈ arylene, C₉ arylene, or C₁₀ arylene, C₁₁ arylene, C₁₂ arylene, C₁₃ arylene, or C₁₄ arylene. Appropriate examples include, but are not limited to, arylenes derived from the following aromatic rings: benzene, biphenyl, methylene diphenyl, naphthalene, anthracene, phenanthrene, perylene, triphenylene, or a hydrocarbyl-substituted form of any one thereof, such as toluene, xylene, tetramethylbenzene, ethylbenzene, dimethylbiphenyl, or the like.

The term "heteroarylene" used herein, also called "divalent heteroheteroaryl", means a group derived from an arylene by replacing at least one carbon atom with a heteroatom, where any one of the heteroatoms may be located at a linking site of the arylene or not, any one of the heteroatoms may be located on an aromatic ring or not, and the heteroatom may be, but is not limited to, N atom, O atom, S atom, P atom, or the like. In a phrase containing this term, for example, "C₂ to C₁₀ heteroarylene" means a heteroarylene containing 2 to 10 carbon atoms, and, in each case of being used herein, may independently be C₂ heteroarylene, C₃ heteroarylene, C₄ heteroarylene, C₅ heteroarylene, C₆ heteroarylene, C₇ heteroarylene, C₈ heteroarylene, C₉ heteroarylene, or C₁₀ heteroarylene.

In some embodiments, R₃ is any one of C₁ to C₈ alkylidene, C₆ to C₁₄ arylene, -(Z₁)ₚ₁-C_{A}-(Z₂)ₚ₂-, or -(Z₁)_{q1}-C_{A1}-(Z₃)_{q3}-C_{A2}-(Z₂)_{q2}-, or a bivalent group formed from any one of the foregoing divalent groups by replacing one or more hydrogen atoms with an Rₐ substituent. In the foregoing structural formulas, Z₁, Z₂, and Z₃ each independently are a covalent bond or C₁ to C₃ alkylidene, C_{A} is a C₄ to C₁₄ divalent alicyclyl, C_{A1} and C_{A2} each independently are a C₅ to C₁₂ divalent alicyclyl, and p1, p2, q1, q2, and q3 each independently are 0 or 1.

In some embodiments, Z₁, Z₂, and Z₃ each independently are a covalent bond or a methylene.

In some embodiments, C_{A} is a divalent cyclobutyl, a divalent cyclopentyl, a divalent cyclohexyl, or

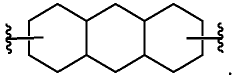

In some embodiments, C_{A1} and C_{A2} each independently are a C₅ to C₁₂ divalent alicyclyl. Optionally, C_{A1} and C_{A2} each independently are a C₄ to C₆ divalent alicyclyl. Further optionally, C_{A1} and C_{A2} each independently are a divalent cyclopentyl or divalent cyclohexyl. Still further optionally, C_{A1} and C_{A2} each independently are a divalent cyclopentyl.

In some embodiments, R₃ is methylene, ethylene, propylene, butylene, pentylene, hexylene, phenylene, -CH₂-Ph-CH₂-, naphthylene, anthrylene, -Ph-CH₂-Ph-, -Ph-Ph-, divalent cyclobutyl, divalent cyclopentyl, divalent cyclohexyl, 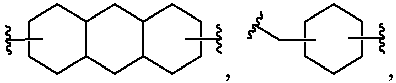 or 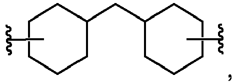 or a bivalent group formed from any one of the foregoing divalent groups by replacing one or more hydrogen atoms with an Rₐ substituent, where Ph is a benzene ring.

In this application, in 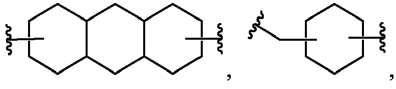 or 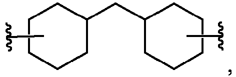 a pair of " 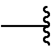 " means forming two monovalent sites by leading out two single bonds from any position on the ring. The two monovalent sites may be located on the same ring or on different rings, and may be located on different ring-forming atoms or on the same ring-forming atom. However, preferably, the two single bonds are lead out from different ring-forming atoms.

In some embodiments, any one Rₐ is independently a halogen atom or a C₁ to C₃ alkyl. Further optionally, any one Rₐ is independently a fluorine atom, a methyl, or an ethyl. Still further optionally, each Rₐ is independently a fluorine atom or a methyl.

In some embodiments, the first additive includes one or more of the following compounds: 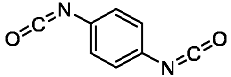 (1,4-diisocyanatobenzene), 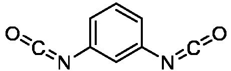 (1,3-diisocyanatobenzene), 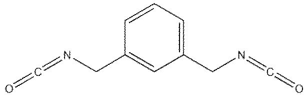 (1,3-bis(isocyanatomethyl)benzene, 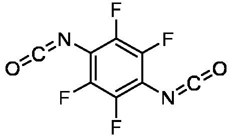 (2,3,5,6-tetrafluorobenzene diisocyanate, 1,2,4,5-tetrafluoro-3,6-diisocyanatobenzene), 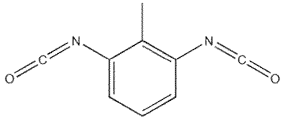 (1,3-diisocyanato-2-methylbenzene), 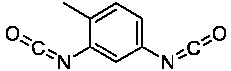 (2,4-diisocyanato-1-methylbenzene), 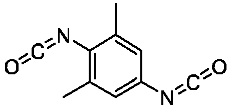 (2,5-diisocyanato-1,3-dimethylbenzene), 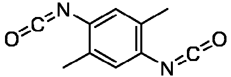 (1,4-diisocyanato-2,5-dimethylbenzene), 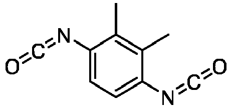 (1 ,4-diisocyanato-2,3 -dimethylbenzene), 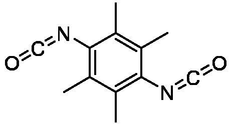 (1,4-diisocyanato-2,3,5,6-tetramethylbenzene), 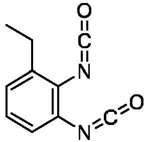 (1-ethyl-2,3-diisocyanatobenzene), 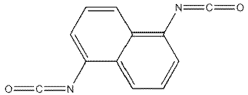 (1,5-diisocyanatonaphthalene), 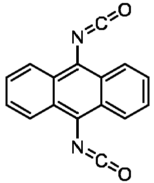 (9,10-diisocyanatoanthracene), 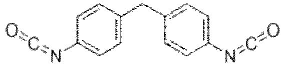 (bis(4-isocyanatophenyl)methane), 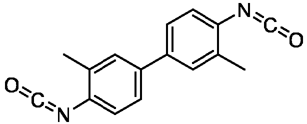 (4,4'-diisocyanato-3,3'-dimethyl-1,1'-biphenyl), 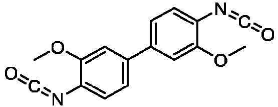 (4,4'-diisocyanato-3,3'-dimethoxy-1,1'-biphenyl), 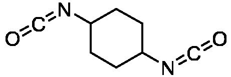 (1,4-diisocyanatocyclohexane), 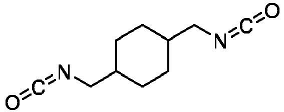 (1,4-bis(isocyanatomethyl)cyclohexane), 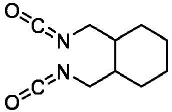 (1,2-bis(isocyanatomethyl)cyclohexane), 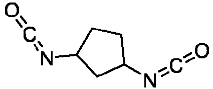 (1,3-diisocyanatocyclopentane), 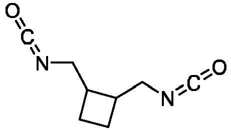 (1,2-bis(isocyanatomethyl)cyclobutane), 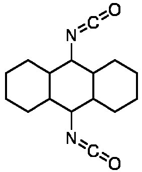 (9,10-diisocyanatotetradecahydroanthracene), 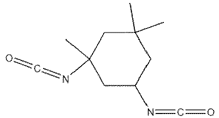 (1,5-diisocyanato-1,3,3-trimethylcyclohexane), 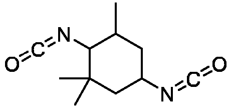 (2,5-diisocyanato-1,1,3-trimethylcyclohexane), 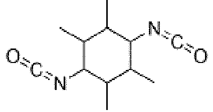 (1,4-diisocyanato-2,3,5,6-tetramethylcyclohexane), 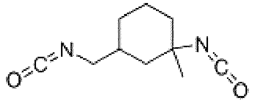 (1-isocyanato-4-(isocyanatomethyl)-1-methylcyclohexane, 1-isocyanato-3-(isocyanatomethyl)-1-methylcyclohexane), 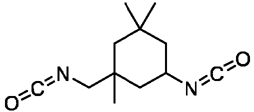 (5-isocyanato-1-(isocyanatomethyl)-1,3,3-trimethylcyclohexane, isophorone diisocyanate, isophorone diisocyanate), 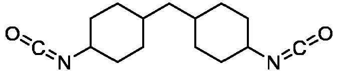 (4,4-diisocyanate dicyclohexylmethane, dicyclohexylmethane-4,4'-diisocyanate, bis(4-isocyanatocyclohexyl)methane), 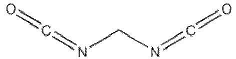 (diisocyanatomethane), 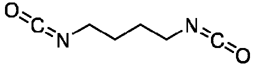 (1,4-diisocyanatobutane), 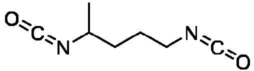 (1,4-diisocyanatopentane), 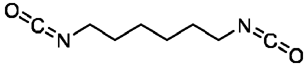 (hexamethylene diisocyanate, HMDI), or the like.

In some embodiments, the first additive includes one or more of the following compounds: 1,4-diisocyanatobenzene, 1,3-diisocyanatobenzene, 1,3-bis(isocyanatomethyl)benzene, 2,3,5,6-tetrafluorobenzene diisocyanate, 1,3-diisocyanato-2-methylbenzene, 2,4-diisocyanato-1-methylbenzene, 2,5-diisocyanato-1,3-dimethylbenzene, 1,4-diisocyanato-2,5-dimethylbenzene, 1,4-diisocyanato-2,3-dimethylbenzene, 1,4-diisocyanato-2,3,5,6-tetramethylbenzene, 1-ethyl-2,3-diisocyanatobenzene, 1,5-diisocyanatonaphthalene, 9,10-diisocyanatoanthracene, bis(4-isocyanatophenyl)methane, 4,4'-diisocyanato-3,3'-dimethyl-1,1'-biphenyl, 4,4'-diisocyanato-3,3'-dimethoxy-1,1'-biphenyl, 1,4-diisocyanatocyclohexane, 1,4-bis(isocyanatomethyl)cyclohexane, 1,2-bis(isocyanatomethyl)cyclohexane, 1,3-diisocyanatocyclopentane, 1,2-bis(isocyanatomethyl)cyclobutane, 9,10-diisocyanatotetradecahydroanthracene, 1,5-diisocyanato-1,3,3-trimethylcyclohexane, 2,5-diisocyanato-1,1,3-trimethylcyclohexane, 1,4-diisocyanato-2,3,5,6-tetramethylcyclohexane, 1-isocyanato-4-(isocyanatomethyl)-1-methylcyclohexane, isophorone diisocyanate, 4,4-diisocyanate dicyclohexylmethane, methylene diisocyanate, 1,4-diisocyanatobutane, 1,4-diisocyanatopentane, or hexamethylene diisocyanate. Further, the first additive may be one or more selected from the diisocyanates listed above.

In some embodiments, the first additive includes one or more of the following compounds: hexamethylene diisocyanate, 1,4-bis(isocyanatomethyl)cyclohexane, 1,3-diisocyanatobenzene, or 2,4-diisocyanate-1-toluene. In some embodiments, the first additive is one or more selected from the following compounds: hexamethylene diisocyanate, 1,4-bis(isocyanatomethyl)cyclohexane, 1,3-diisocyanatobenzene, or 2,4-diisocyanate-1-toluene.

In some embodiments, a mass percent (denoted as W₁) of the first additive in the non-aqueous electrolyte is 0% to 11%. When W₁ is 0, it means that no first additive is added in the non-aqueous electrolyte. The mass percent W₁ of the first additive in the non-aqueous electrolyte may be any one of the following values: 0, 0.005%, 0.01%, 0.015%, 0.02%, 0.05%, 0.1%, 0.5%, 1%, 2%, 3%, 4%, 5%, 6%, 7%, 8%, 10%, 11%, or the like, or may be a value falling within a range formed by any two of the foregoing values, such as 0.005% to 11%, 0.005% to 10%, 0.1% to 5%, 1% to 5%, 0 to 1%, 0.1% to 1%, 0.01% to 10%, 1% to 10%, or the like.

In some embodiments, the non-aqueous electrolyte further includes a second additive. The second additive includes one or more of lithium monofluorophosphate, lithium difluorophosphate, lithium tetrafluoroborate, a compound represented by Formula (3), or fluorosulfonate.

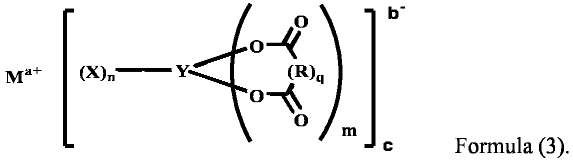

In Formula (3), a, b, and c each independently are a positive integer, m is an integer selected from 1 to 3, n is an integer selected from 0 to 4, and q is 0 or 1; M^{a+} is a metal ion with a-valence positive charge; any one Y is independently a boron atom or a phosphorus atom; X is a halogen atom; and any one R is independently one of a substituted or unsubstituted C₁ to C₁₀ alkylidene, substituted or unsubstituted C₁ to C₁₀ haloalkylidene, substituted or unsubstituted C₆ to C₂₀ arylene, or substituted or unsubstituted C₆ to C₂₀ haloarylene.

In this application, the halogen atom in the haloalkylidene may be one or more of fluorine, chlorine, bromine, or iodine, and further, may be fluorine. The number of halogen atoms in the haloalkylidene may be 1 or more.

In this application, the halogen atom in the haloarylene may be one or more of fluorine, chlorine, bromine, or iodine, and further, may be fluorine. The number of halogen atoms in the haloarylene may be 1 or more.

In some embodiments, any one R is independently one of Rc-substituted or unsubstituted C₁ to C₁₀ alkylidene, Rc-substituted or unsubstituted C₁ to C₁₀ haloalkylidene, Rc-substituted or unsubstituted C₆ to C₂₀ arylene, or Rc-substituted or unsubstituted C₆ to C₂₀ haloarylene. A substituent in the Rc-substituted C₁ to C₁₀ alkylidene, a substituent in the Rc-substituted C₁ to C₁₀ haloalkylidene, a substituent in the Rc-substituted C₆ to C₂₀ arylene, and an Rc substituent in the Rc-substituted C₆ to C₂₀ haloarylene each may independently include one or more of the following substituents: halogen atom, -CN, -NCO, -OH, -COOH, -SOOH, -OC=(O)R₄₁, -C=(O)OR₄₂, C₁ to C₁₀ alkyl, C₂ to C₁₀ alkenyl, C₂ to C₁₀ alkynyl, C₂ to C₁₀ alkoxyl, where R₄₁ and R₄₂ each independently are C₁ to C₆ alkyl, such as methyl, ethyl, or the like. A substituent in the Rc-substituted C₁ to C₁₀ alkylidene, a substituent in the Rc-substituted C₁ to C₁₀ haloalkylidene, a substituent in the Rc-substituted C₆ to C₂₀ arylene, and an Rc substituent in the Rc-substituted C₆ to C₂₀ haloarylene each may independently be one or more selected from the following substituents: halogen atom, -CN, -NCO, -OH, -COOH, -SOOH, -OC=(O)R₄,, -C=(O)OR₄₂, C₁ to C₁₀ alkyl, C₂ to C₁₀ alkenyl, C₂ to C₁₀ alkynyl, C₂ to C₁₀ alkoxyl, where R₄₁ and R₄₂ each independently are C₁ to C₆ alkyl, such as methyl, ethyl, or the like. In this application, unless otherwise specified, when R contains a substituent Rc, the number of Rc substituents may be 1 or more.

In some embodiments, in the non-aqueous electrolyte, M in M^{a+} includes one or more of Li, Na, K, Rb, Cs, Mg, Ca, Ba, Al, Fe, Cu, or Ni.

In some embodiments, a, b, and c each independently are selected from 1, 2, or 3.

In some embodiments, m is 1, 2, or 3.

In some embodiments, n is 0 or 1 to 4, and further, may be 0, 1, 2, 3, or 4.

In some embodiments, the second additive includes one or more of lithium difluorophosphate, lithium monofluorophosphate, lithium tetrafluoroborate, lithium fluorosulfonate, or sodium fluorosulfonate. Further, the second additive may be one or more of lithium difluorophosphate, lithium monofluorophosphate, lithium tetrafluoroborate, lithium fluorosulfonate, or sodium fluorosulfonate.

In some embodiments, a mass percent (denoted as W₂) of the second additive in the non-aqueous electrolyte is 0% to 11%. The mass percent W₂ of the second additive in the non-aqueous electrolyte is any one of the following values: 0, 0.005%, 0.01%, 0.015%, 0.02%, 0.05%, 0.1%, 0.5%, 1%, 2%, 3%, 4%, 5%, 6%, 7%, 8%, 10%, 11%, or the like, or may be a value falling within a range formed by any two of the foregoing values, such as 0.005% to 11%, 0.01% to 11%, 0 to 10%, 0.005% to 10%, 0.01% to 10%, 0.05% to 10%, 0.05% to 5%, or the like. When W₂ is 0, it means that no second additive is added in the non-aqueous electrolyte.

The first additive diisocyanate added may increase the impedance of the formed SEI film. By adding the second additive into the non-aqueous electrolyte, an SEI film rich in inorganic compounds can be formed on the negative electrode, thereby not only improving the fast-charge performance of the secondary battery, but also further improving the cycle performance of the secondary battery.

In some embodiments, a volume median diameter Dᵥ₅₀ of the negative active material is greater than or equal to 6 µm. Dᵥ₅₀ represents a particle diameter corresponding to a cumulative volume distribution percentage 50% in a volume-based particle size distribution curve of a substance or material. Optionally, the volume median diameter Dᵥ₅₀ of the negative active material is 6 µm to 20 µm. Further optionally, the volume median diameter Dᵥ₅₀ of the negative active material is 15 µm to 20 µm. The Dv₅₀ of the negative active material may be any one of the following values: 6 µm, 8 µm, 10 µm, 12 µm, 15 µm, 16 µm, 18 µm, 20 µm, or the like, or a value falling within a range formed by any two of the foregoing values.

In the context of this application, a cumulative volume distribution diameter D_{vN} (where N represents any value selected from 0 to 100) may be used for characterizing the particle diameter of a substance or material, and means a particle diameter corresponding to a cumulative volume distribution percentage N% in a volume-based particle size distribution curve of the substance or material. The volume percentage of the particles with a particle diameter less than or equal to D_{vN} is N%. D_{vN} may be obtained from a volume-based cumulative particle size distribution curve of the substance or material. Unless otherwise specified, the volume-based cumulative particle size distribution curve counts the cumulative volume of particles from a small-diameter side that starts from zero. Using Dᵥ₅₀ as an example, Dᵥ₅₀ is a particle diameter corresponding to a cumulative volume distribution percentage 50% in the volume-based particle size distribution curve of the substance or material. For example, Dᵥ₅₀ means that the particle diameters of the particles whose cumulative volume is 50% of the total volume of the substance or material are less than or equal to Dᵥ₅₀, and the particle diameters of the particles whose cumulative volume is another 50% of the total volume of the substance or material are greater than Dᵥ₅₀. The meaning of volume median diameter Dᵥ₅₀ is understood by a person skilled in the art, and may be determined by using an instrument and method well known in the art. For example, the volume median diameter may be measured conveniently by using a laser particle size analyzer such as a Mastersizer 2000E laser particle size analyzer by Britain-based Malvern Instruments Ltd. or an LS-909 laser particle size analyzer (by OMEC Instruments Co., Ltd.) with reference to the standard GB/T 19077-2016 *Particle Size Analysis-Laser Diffraction Methods.*

By controlling the particles of the negative active material to possess a relatively large particle diameter, the contact area between the negative electrode material and the electrolyte solution can be reduced, and the probability of side reactions between the negative electrode material and the solvent on the negative electrode surface can be reduced, thereby reducing the expansion rate of the electrode plate, and improving the cycle performance of the battery cell.

In some embodiments, a BET specific surface area of the negative active material is 0.5 m²/g to 2.0 m²/g. Optionally, the BET specific surface area of the negative active material is 0.8 m²/g to 1.5 m²/g. The BET specific surface area of the negative active material may be any one of the following values or a value falling within a range formed by any two of the following values: 0.5 m²/g, 0.6 m²/g, 0.8 m²/g, 1 m²/g, 1.5 m²/g, 1.8 m²/g, 2 m²/g, or the like.

In this application, the BET specific surface area of the negative active material may be measured by using a nitrogen adsorption-based specific surface area analysis method, and may be calculated by a Brunauer Emmett Teller (BET) method. The nitrogen adsorption-based specific surface area analysis may be performed with reference to GB/T 19587-2004 by using a Tri Star II specific surface area and porosity analyzer manufactured by the US-based Micromeritics Company. The specimens to be tested are the negative active material feedstock, or the negative active material sampled from the negative active material layer of the negative electrode plate. The test and analysis method is as follows: Drying the specimen at 200 °C in a vacuum oven for 2 hours; using argon as an adsorption gas, and plotting an adsorption-desorption curve with a relative pressure P/P₀ of 0 to 0.99 by using a specific surface area and porosity analyzer, where P is an equilibrium adsorption pressure, and P₀ is a saturated vapor pressure; and calculating the specific surface area of the negative active material by a BET method.

By controlling the particles of the negative active material to possess a specified specific surface area, the surface area of the negative electrode material can be reduced, thereby reducing the contact area between the negative electrode material and the electrolyte solution, and in turn, reducing the side reactions of the solvent on the negative electrode surface, and improving the cycle performance of the battery cell.

### Negative electrode plate

In this application, a negative electrode plate in a secondary battery includes a negative active material layer. The negative active material layer includes a negative active material. The negative active material includes a graphite material.

In some embodiments, the negative electrode plate includes a negative current collector and a negative electrode film layer disposed on at least one surface of the negative current collector. The negative electrode film layer includes a negative active material layer. The negative active material layer includes a negative active material. The negative active material includes a graphite material.

In some embodiments, the mass percent of the graphite material in the negative active material is greater than or equal to 50%. The mass percent of the graphite material in the negative active material may be any one of the following values, or greater than or equal to any one of the following values, or fall within a range from any one of the following values to 100%, or may be a value falling within a range formed by any two of the following values: 50%, 60%, 70%, 80%, 90%, 95%, 96%, 97%, 98%, 99%, or the like. In some embodiments, the mass percent of the graphite material in the negative active material is greater than or equal to 80%. In some embodiments, the mass percent of the graphite material in the negative active material is 100%.

As a non-restrictive example, the negative current collector includes two surfaces opposite to each other in a thickness direction of the negative current collector. The negative electrode film layer is disposed on either or both of the two opposite surfaces of the negative current collector.

In some embodiments, the negative current collector may be a metal foil or a composite current collector. For example, the metal foil may be copper foil. The composite current collector may include a polymer material substrate and a metal layer formed on at least one surface of the polymer material substrate. The composite current collector may be obtained by disposing a metal material on a polymer material substrate. In the negative current collector, non-restrictive examples of the metal material may include one or more of copper, copper alloy, nickel, nickel alloy, titanium, titanium alloy, silver, silver alloy, or the like. In the negative current collector, non-restrictive examples of the polymer material substrate may include one or more of polypropylene (PP), polyethylene terephthalate (PET), polybutylene terephthalate (PBT), polystyrene (PS), polyethylene (PE), or the like.

In some embodiments, the graphite material in the negative active material may include one or more of artificial graphite or natural graphite. The negative active material may further include another negative active material well known in the art for use in a battery. As a non-restrictive example, the negative active material may further include one or more of the following materials: soft carbon, hard carbon, silicon-based material, tin-based material, lithium titanium oxide, and the like. The silicon-based material may include one or more of elemental silicon, a silicon oxide compound, silicon-carbon composite, siliconnitrogen composite, or silicon alloy. The tin-based material may include one or more of elemental tin, tin oxide compound, or tin alloy. However, such materials are not limited herein, and other conventional materials usable as a negative active material of a battery may be used instead, as long as the graphite material is contained. The graphite material alone may be used as the negative active material, or at least two of such negative active materials may be used in combination (in this case, at least the graphite material is included).

In some embodiments, the negative active material includes artificial graphite.

In some embodiments, the negative electrode film layer further optionally includes a binder. The binder may include one or more of styrene-butadiene rubber (SBR), polyacrylic acid (PAA), polyacrylic acid sodium (PAAS), polyacrylamide (PAM), polyvinyl alcohol (PVA), sodium alginate (SA), polymethyl acrylic acid (PMAA), or carboxymethyl chitosan (CMCS).

In some embodiments, the negative electrode film layer further optionally includes a conductive agent. The conductive agent may include one or more of superconductive carbon, acetylene black, carbon black, Ketjen black, carbon dots, carbon nanotubes, graphene, or carbon nanofibers.

In some embodiments, the negative electrode film layer further optionally includes other agents, such as a thickener. Non-restrictive examples of the thickener may include sodium carboxymethyl cellulose (CMC-Na) and the like.

In some embodiments, the negative electrode plate may be prepared according to the following method: dispersing the ingredients of the negative electrode plate such as the negative active material, the conductive agent, and the binder and any other ingredients in a solvent (a non-restrictive example of the solvent is deionized water) to form a negative electrode slurry, coating at least one side of a negative current collector with the negative electrode slurry, and performing steps such as oven-drying and compaction (such as cold-pressing) to obtain a negative electrode plate. The negative electrode slurry may be applied on just a single surface of the negative current collector or on both surfaces of the negative current collector. The solid content of the negative electrode slurry may be 40 wt% to 60 wt%. A compaction density of the negative electrode plate may be 1.4 g/cm³ to 1.95 g/cm³, and further optionally 1.5 g/cm³ to 1.8 g/cm³.

In this application, wt% means a mass percent or weight percent.

### Positive electrode plate

In this application, a positive electrode plate includes a positive current collector and a positive electrode film layer that overlays at least one surface of the positive current collector. The positive electrode film layer includes a positive active material layer. Further, the positive active material layer includes a positive active material.

As a non-restrictive example, the positive current collector includes two surfaces opposite to each other in a thickness direction of the positive current collector. The positive electrode film layer is disposed on either or both of the two opposite surfaces of the positive current collector.

In some embodiments, the positive current collector may be a metal foil or a composite current collector. For example, the metal foil may be aluminum foil. The composite current collector may include a polymer material substrate and a metal layer formed on at least one surface of the polymer material substrate. The composite current collector may be formed by overlaying the polymer material substrate with a metal material. The metal material may include one or more of aluminum, aluminum alloy, nickel, nickel alloy, titanium, titanium alloy, silver, silver alloy, or the like. Non-restrictive examples of the polymer material substrate include the materials such as polypropylene (PP), polyethylene terephthalate (PET), polybutylene terephthalate (PBT), polystyrene (PS), and polyethylene (PE).

In some embodiments of this application, the positive active material includes a lithium-ion material. Further, the secondary battery is a lithium-ion secondary battery.

In some embodiments of this application, the secondary battery is a lithium-ion secondary battery. The lithium-ion secondary battery implements charge and discharge processes by using the intercalation and deintercalation of lithium ions in the electrodes and the transport of the lithium ions in the electrolyte. Generally, active ions in the lithium-ion secondary battery are lithium ions, but are not limited to lithium ions.

The positive active material may be a positive active material well known in the art for use in a battery. As non-restrictive examples, the positive active material may include one or more of the following materials or substances: olivine-structured lithium-containing phosphate, lithium transition metal oxide, or a modified compound thereof. However, this application does not limit such materials or substances, and other conventional materials or substances usable as a positive active material of a battery may be used instead. One of the positive active materials may be used alone, or at least two thereof may be used in combination. Non-restrictive examples of the lithium transition metal oxide may include, but are not limited to, one or more of lithium cobalt oxide, lithium nickel oxide, lithium manganese oxide, lithium nickel cobalt oxide, lithium manganese cobalt oxide, lithium nickel manganese oxide, lithium nickel cobalt manganese oxide, lithium nickel cobalt aluminum oxide, a modified compound thereof, or the like. Non-restrictive examples of the lithium cobalt oxide include LiCoO₂. Non-restrictive examples of the lithium nickel oxide include LiNiO₂. Non-restrictive examples of the lithium manganese oxide include LiMnO₂, LiMn₂O₄, and the like. Non-restrictive examples of the lithium nickel cobalt manganese oxide include LiNi_{1/3}Co_{1/3}Mn_{1/3}O₂ (briefly referred to as NCM333), LiNi_{0.5}Co_{0.2}Mn_{0.3}O₂ (briefly referred to as NCM523), LiNi_{0.5}CO_{0.25}Mn_{0.25}O₂ (briefly referred to as NCM211), LiNi_{0.6}Co_{0.2}Mn_{0.2}O₂ (briefly referred to as NCM622), LiNi_{o0..8}Co_{0.1}Mn_{0.1}O₂ (briefly referred to as NCM811), and the like. Non-restrictive examples of the lithium nickel cobalt aluminum oxide include LiNi_{0.85}Co_{0.13}Al_{0.03}O₂. Non-restrictive examples of the olivine-structured lithium-containing phosphate include, but are not limited to, one or more of lithium iron phosphate, a composite of lithium iron phosphate and carbon, lithium manganese phosphate, a composite of lithium manganese phosphate and carbon, lithium manganese iron phosphate, or a composite of lithium manganese iron phosphate and carbon. Non-restrictive examples of lithium iron phosphate include LiFePO₄ (briefly referred to as LFP). Non-restrictive examples of lithium manganese phosphate include LiMnPO₄.

In some embodiments, the positive active material may include, but is not limited to, one or more of the following materials: lithium iron phosphate, lithium manganese iron phosphate, lithium cobalt oxide, lithium nickel oxide, lithium manganese oxide, lithium nickel manganese oxide, lithium nickel cobalt manganese oxide, lithium nickel cobalt aluminum oxide, sodium oxide, potassium oxide, or a material formed by any one of the foregoing materials and a doping element. Further, the doping element in any one of the positive active materials independently includes one or more of a transition metal element or a non-transition metal element.

In some embodiments, the positive electrode film layer further optionally includes a binder. As an non-restrictive example, the binder may include one or more of polyvinylidene difluoride (PVDF), polytetrafluoroethylene (PTFE), poly(vinylidene fluoride-co-tetrafluoroethylene-co-propylene), poly (vinylidene fluoride-co-hexafluoropropylene-co-tetrafluoroethylene), poly(tetrafluoroethylene-co-hexafluoropropylene), or fluorinated acrylate resin.

In some embodiments, the positive electrode film layer further optionally includes a conductive agent. As a non-restrictive example, the conductive agent may include one or more of superconductive carbon, acetylene black, carbon black, Ketjen black, carbon dots, carbon nanotubes, graphene, or carbon nanofibers.

In some embodiments, the positive electrode plate may be prepared by the following method: Dispersing the constituents of the positive electrode plate such as positive active material, conductive agent, and binder and any other constituents in a solvent to form a positive electrode slurry; coating at least one surface of the positive current collector with the positive electrode slurry, and performing steps such as oven-drying and compaction (such as cold-pressing) to obtain a positive electrode plate. The types of the solvent may include, but are not limited to, any one of the solvents mentioned in the foregoing embodiments, such as N-methyl pyrrolidone (NMP). The positive electrode slurry may be applied on just a single surface of the positive current collector or on both surfaces of the positive current collector. The solid content of the positive electrode slurry may be 40 wt% to 80 wt%. The compaction density of the positive electrode plate may be 3.0 to 3.6 g/cm³, and optionally 3.3 to 3.5 g/cm³.

### Electrolyte

The electrolyte serves to conduct active ions between the positive electrode plate and the negative electrode plate. The electrolyte in this application includes an electrolyte solution.

In some embodiments, the electrolyte solution is a non-aqueous electrolyte. The non-aqueous electrolyte may include an electrolyte salt and a solvent. In a lithium-ion secondary battery, the electrolyte salt may include an electrolyte lithium salt.

In some embodiments, the electrolyte lithium salt may include one or more of lithium hexafluorophosphate (LiPF₆), lithium tetrafluoroborate (LiBF₄), lithium perchlorate (LiClO₄), lithium hexafluoroarsenate, lithium bisfluorosulfonimide (LIFSI), lithium bistrifluoromethanesulfonimide (LiTFSI), lithium trifluoromethanesulfonate, lithium difluorophosphate, lithium difluoro(oxalato)borate, lithium bis(oxalato)borate, lithium difluoro(bisoxalato)phosphate, and lithium tetrafluoro(oxalato)phosphate.

In some embodiments, the solvent is an organic solvent.

In this application, the solvent in the non-aqueous electrolyte includes a chain carboxylate (denoted as a first solvent). The first solvent has been defined earlier above.

In some embodiments, the solvent in the non-aqueous electrolyte may include one or more of an ether solvent or a carbonate solvent in addition to the first solvent. The carbonate solvent may include one or more of a carbonate or a halogenated carbonate. Non-restrictive examples of the carbonate solvent are one or more of ethylene carbonate (EC), propylene carbonate (PC), and ethyl methyl carbonate (EMC), diethyl carbonate (DEC), dimethyl carbonate (DMC), dipropyl carbonate (DPC), methylpropyl carbonate (MPC), ethylpropyl carbonate (EPC), or a fluorinated compound of any one thereof.

In some other embodiments, the solvent in the non-aqueous electrolyte may include, in addition to the first solvent, one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate, ethyl propyl carbonate, butylene carbonate, fluoroethylene carbonate, 1,4-butyrolactone, sulfolane, dimethyl sulfone, ethyl methyl sulfone, or diethyl sulfone.

In some embodiments, the solvent in the non-aqueous electrolyte may include one or more of ethylene carbonate (EC) or ethyl methyl carbonate (EMC) in addition to the first solvent. In some embodiments, the solvent includes ethylene carbonate. In some embodiments, the solvent includes ethyl methyl carbonate. In some embodiments, the solvent includes ethylene carbonate and ethyl methyl carbonate. Further, the volume ratio between the ethylene carbonate and the ethyl methyl carbonate may be, but is not limited to, 3: 7.

In some embodiments, the solvent is a combination of the first solvent, ethylene carbonate, and ethyl methyl carbonate.

In some embodiments, the electrolyte solution further optionally includes an additive. For example, the additive may include a negative electrode film-forming additive or a positive electrode film-forming additive. The additive may further include an additive capable of improving specified performance of the battery, for example, an additive for improving overcharge performance of the battery, or an additive for improving high- or low-temperature performance of the battery.

In some embodiments, the additive may include one or more of vinylene carbonate (VC), vinyl ethylene carbonate (VEC), fluoroethylene carbonate (FEC), difluoroethylene carbonate (DFEC), trifluoromethyl ethylene carbonate (TFPC), methylene methane disulfonate (MMDS), 1-propylene-1,3-sultone (PST), ethylene sulfite (ES), propylene sulfite (PS), ethylene sulfate (DTD), succinonitrile (SN), adiponitrile (ADN), sulfonate cyclic quaternary ammonium salt, tris(trimethylsilane)phosphate (TMSP), tris(trimethylsilane)borate (TMSB), or anisole.

In some embodiments, the additive includes one or more of a first additive or a second additive.

In some embodiments, the additive includes a first additive.

In some embodiments, the additive includes a second additive.

In some embodiments, the additive includes both the first additive and the second additive.

The first additive and the second additive are defined earlier above, and the definitions include but are not limited to type and dosage.

### Separator

In some embodiments, the secondary battery further includes a separator. The type of the separator is not particularly limited in this application, and may be any well-known porous separator that is highly stable both chemically and mechanically.

In some embodiments, the material of the separator may include one or more of glass fiber, non-woven fabric, polyethylene, polypropylene, or polyvinylidene difluoride. The separator may be a single-layer film or a multilayer composite film, without being particularly limited. When the separator is a multilayer composite film, materials in different layers may be identical or different, without being particularly limited.

### Electrode assembly, electrochemical energy storage device, secondary battery

In some embodiments, the positive electrode plate, the negative electrode plate, and the separator may be made into an electrode assembly by winding or stacking.

In some embodiments, the electrochemical energy storage device may include an outer package. The outer package may be configured to package the electrode assembly and the electrolyte.

In some embodiments, the secondary battery may include an outer package. The outer package may be configured to package the electrode assembly and the electrolyte.

In some embodiments, the outer package of the secondary battery may be a hard shell such as a hard plastic shell, an aluminum shell, a steel shell, or the like. Alternatively, the outer package of the secondary battery may be a soft package such as a pouch-type soft package. The material of the soft package may be plastic. Further, non-restrictive examples of the plastic may include one or more of polypropylene, polybutylene terephthalate, polybutylene succinate, or the like.

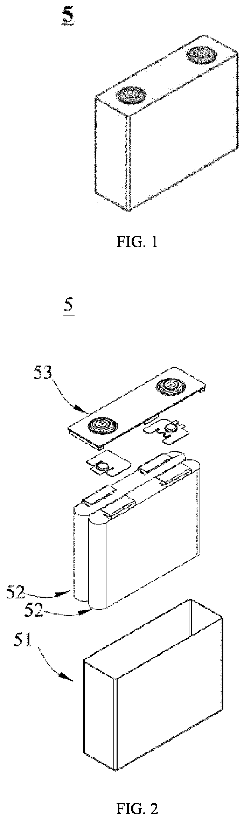

The shape of the secondary battery is not particularly limited in this application, and may be cylindrical, prismatic or any other shape. FIG. 1 shows a prismatic secondary battery 5 as an example.

In some embodiments, referring to FIG. 2, the outer package may include a housing 51 and a cap plate 53. The housing 51 may include a bottom plate and a side plate connected to the bottom plate. The bottom plate and the side plate close in to form an accommodation cavity. An opening that communicates with the accommodation cavity is created on the housing 51. The cap plate 53 can fit and cover the opening to close the accommodation cavity. The positive electrode plate, the negative electrode plate, and the separator may be made into the electrode assembly 52 by winding or stacking. The electrode assembly 52 is packaged in the accommodation cavity. The electrolyte solution infiltrates in the electrode assembly 52. The number of electrode assemblies 52 in a secondary battery 5 may be one or more, and may be selected by a person skilled in the art as actually required.

In some embodiments, the secondary battery achieves one or more of the following effects:
Fast-charge time: Fast-charge time is less than or equal to 35 min; further, less than or equal to 33 min; further, less than or equal to 32 min; further, less than or equal to 30 min; and still further, less than or equal to 28 min;
Expansion of the negative electrode plate: The expansion rate of the negative electrode plate cycled at 45 °C to 80% SOH is less than or equal to 36%; further, less than or equal to 35.5%; further, less than or equal to 33%; further, less than or equal to 32%; further, less than or equal to 30%; and still further, less than or equal to 258%;
Cycle performance: The number of cycles counted when the battery is cycled at 45 °C to 80% SOH is greater than or equal to 800; further, greater than or equal to 900; further, greater than or equal to 950; further, greater than or equal to 1000; further, greater than or equal to 1100; further, greater than or equal to 1150; and still further, greater than or equal to 1200;
Anti-gassing capability: The expansion rate of the battery cell stored at 60 °C for 30 days is less than or equal to 9%; further, less than or equal to 8%; further, less than or equal to 7.5%; and, still further, less than or equal to 7%.

In some embodiments, the secondary battery achieves superior storage performance in addition to superior comprehensive performance in terms of fast-charge capability, cycle performance, and safety performance. In some embodiments, the capacity retention rate of the battery stored at 60 °C for 30 days is greater than or equal to 85%; further, greater than or equal to 88%; further, greater than or equal to 90%; and, still further, greater than or equal to 95%.

In some embodiments, the fast-charge time is less than or equal to 35 min; the expansion rate of the negative electrode plate cycled at 45 °C to 80% SOH is less than or equal to 33%; the number of cycles counted when the battery cell is cycled at 45°C to 80% SOH is greater than or equal to 900; the expansion rate of the battery cell stored at 60 °C for 30 days is less than or equal to 8%; and further, the capacity retention rate of the battery cell stored at 60 °C for 30 days is greater than or equal to 88%.

In some embodiments, the fast-charge time is less than or equal to 33 min; the expansion rate of the negative electrode plate cycled at 45 °C to 80% SOH is less than or equal to 32%; the number of cycles counted when the battery cell is cycled at 45°C to 80% SOH is greater than or equal to 1000; the expansion rate of the battery cell stored at 60 °C for 30 days is less than or equal to 8%; and further, the capacity retention rate of the battery cell stored at 60 °C for 30 days is greater than or equal to 90%.

In some embodiments, the fast-charge time is less than or equal to 30 min; the expansion rate of the negative electrode plate cycled at 45 °C to 80% SOH is less than or equal to 30%; the number of cycles counted when the battery cell is cycled at 45°C to 80% SOH is greater than or equal to 950; the expansion rate of the battery cell stored at 60 °C for 30 days is less than or equal to 8%; and further, the capacity retention rate of the battery cell stored at 60 °C for 30 days is greater than or equal to 90%.

In some embodiments, the fast-charge time is less than or equal to 35 min; the expansion rate of the negative electrode plate cycled at 45 °C to 80% SOH is less than or equal to 32%; the number of cycles counted when the battery cell is cycled at 45°C to 80% SOH is greater than or equal to 900; the expansion rate of the battery cell stored at 60 °C for 30 days is less than or equal to 7%; and further, the capacity retention rate of the battery cell stored at 60 °C for 30 days is greater than or equal to 88%.

In some embodiments, the fast-charge time is less than or equal to 30 min; the expansion rate of the negative electrode plate cycled at 45 °C to 80% SOH is less than or equal to 30%; the number of cycles counted when the battery cell is cycled at 45°C to 80% SOH is greater than or equal to 1000; the expansion rate of the battery cell stored at 60 °C for 30 days is less than or equal to 7%; and further, the capacity retention rate of the battery cell stored at 60 °C for 30 days is greater than or equal to 90%.

In some embodiments, the fast-charge time is less than or equal to 32 min; the expansion rate of the negative electrode plate cycled at 45 °C to 80% SOH is less than or equal to 33%; the number of cycles counted when the battery cell is cycled at 45°C to 80% SOH is greater than or equal to 1100; the expansion rate of the battery cell stored at 60 °C for 30 days is less than or equal to 7.5%; and further, the capacity retention rate of the battery cell stored at 60 °C for 30 days is greater than or equal to 90%.

In some embodiments, the fast-charge time is less than or equal to 28 min; the expansion rate of the negative electrode plate cycled at 45 °C to 80% SOH is less than or equal to 28%; the number of cycles counted when the battery cell is cycled at 45°C to 80% SOH is greater than or equal to 1200; the expansion rate of the battery cell stored at 60 °C for 30 days is less than or equal to 7.5%; and further, the capacity retention rate of the battery cell stored at 60 °C for 30 days is greater than or equal to 95%.

According to a second aspect, this application provides an electrical device. The electrical device includes the secondary battery according to the first aspect of this application.

The secondary battery may be used as a power supply of the electrical device, or used as an energy storage unit of the electrical device. The electrical device may be, but is not limited to, a mobile device, an electric vehicle, an electric train, a watercraft, a satellite, an energy storage system, or the like. For example, the mobile device may be, but is not limited to, a mobile phone, a laptop computer, or the like; and the electric vehicle may be, but is not limited to, a battery electric vehicle, a hybrid electric vehicle, a plug-in hybrid electric vehicle, an electric bicycle, an electric scooter, an electric golf cart, an electric truck, or the like.

The secondary battery may be selected for use in the electrical device according to the use requirements.

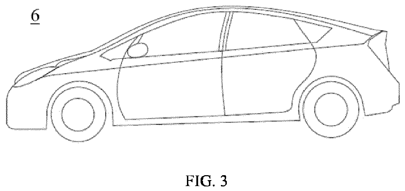

FIG. 3 shows an electrical device 6 as an example. The electrical device may be a battery electric vehicle, a hybrid electric vehicle, a plug-in hybrid electric vehicle, or the like. The electrical device may adopt a battery pack or a battery module in order to meet the requirements of the electrical device on a high power and a high energy density of the secondary battery.

In another example, the device may be a mobile phone, a tablet computer, a notebook computer, or the like. The device is generally required to be thin and light, and may have a secondary battery as a power supply.

The following describes some embodiments of this application. The embodiments described below are illustrative, and are merely intended to construe this application but not to limit this application. Unless techniques or conditions are otherwise expressly specified in an embodiment hereof, the techniques or conditions described above or described in the literature in this field or in an instruction manual of the product apply to the embodiment. A reagent or instrument used in an embodiment hereof without specifying a manufacturer is a conventional product that is commercially available in the market, or is formed by synthesizing commercially available products in a conventional manner.

### Embodiment 1

### 1. Preparing a negative electrode plate

1.1 The type of the negative active material is selected according to Table 1. The negative active material with a specified volume median diameter Dᵥ₅₀ and a specified BET specific surface area is selected.

### (1) Measuring a particle size

Preparing specimens: The specimens are the negative active material feedstock, or the negative active material sampled from the negative active material layer of the negative electrode plate. To prevent agglomeration in a drying process from affecting the particle size test, wet specimens that have been washed are taken for dispersion and testing.

Type of the particle diameter to be tested: volume median diameter Dᵥ₅₀.

Equipment model: Malvern 3000 (MasterSizer 3000) laser particle size analyzer; reference standard: GB/T19077-2016/ISO 13320:2009.

Test process: Taking an appropriate amount of the specimen (the concentration of the specimen needs to enable the shading degree to be 8% to 12%), adding 20 mL of absolute ethanol, ultrasonic-treating the solution for 5 minutes (53 kHz/120 W) to completely disperse the specimen, and then testing the specimen with reference to the standard GB/T19077 -2016/ISO 13320:2009.

### (2) Testing the BET specific surface area of the negative active material

Preparing specimens: The specimens are the negative active material feedstock, or the negative active material sampled from the negative active material layer of the negative electrode plate.

Test method: The BET specific surface area may be measured by using a nitrogen adsorption-based specific surface area analysis method, and may be calculated by a Brunauer Emmett Teller (BET) method. The nitrogen adsorption-based specific surface area analysis may be performed with reference to GB/T 19587-2004 by using a Tri Star II specific surface area and porosity analyzer manufactured by the US-based Micromeritics Company.

The detailed steps are as follows: Drying the specimen at 200 °C in a vacuum oven for 2 hours; using argon as an adsorption gas, and plotting an adsorption-desorption curve with a relative pressure P/P₀ of 0 to 0.99 by using a specific surface area and porosity analyzer, where P is an equilibrium adsorption pressure, and P₀ is a saturated vapor pressure; and calculating the specific surface area of the negative active material by a BET method.

### 1.2 Preparing a negative electrode plate

Dissolving artificial graphite as a negative active material, carbon black as a conductive agent, styrene-butadiene rubber (SBR) as a binder, sodium carboxymethyl cellulose (CMC-Na) as a thickener at a mass ratio of 90: 4: 4: 2 in a deionized water solvent, and mixing the constituents evenly to form a negative electrode slurry (with a solid content of 48%). Applying the negative electrode slurry evenly onto both surfaces of a negative current collector copper foil at one or more times, and performing the steps of oven-drying, cold-pressing, and cutting to obtain a negative electrode plate. The compaction density of the negative electrode plate is 1.65 g/cm³.

The OI value of the negative electrode plate may be adjusted by adjusting at least one of the following parameters: the OI value of the graphite particles, Dᵥ₅₀ of the graphite particles, a porosity of the negative electrode plate, a compaction density of the negative electrode plate, type and content of constituents of the negative electrode plate, and the like.

Testing the OI value of the negative electrode plate: Measuring the intensity of the 004 crystal plane diffraction peak and the intensity of the 110 crystal plane diffraction peak by using an X-ray powder diffractometer (X'pert PRO). An X-ray diffraction pattern is obtained in accordance with the *General Rules for X-Ray Diffractometry* and the method for determining lattice parameters of graphite specified in JIS K 0131 -1996 and JB/T4220-2011, and then calculating a ratio of the intensity of the 004 crystal plane diffraction peak to the intensity of the 110 crystal plane diffraction peak of the negative active material layer, where the calculation formula is: OI = I₀₀₄/I₁₁₀, where I₀₀₄ is the intensity of the 004 crystal plane diffraction peak, and I₁₁₀ is the intensity of the 110 crystal plane diffraction peak.

Measuring the resistance value R of the negative electrode plate: Measuring the resistance value R by using a BER1300 versatile electrode plate resistance meter. First, cutting the negative electrode plate into specimens of a specified size (small discs with a diameter of 40 mm); placing the specimen between two probes, and measuring and recording the test results. Testing a plurality of (≥ 5) specimens, averaging out the measured values of the specimens, and using the average value as a test result.

### 2. Formulating an electrolyte solution (non-aqueous electrolyte)

Mixing ethylene carbonate (EC) and ethyl methyl carbonate (EMC) evenly at a volume ratio of 3: 7 in an argon atmosphere glovebox (in which the content of H₂O is less than 0.1 ppm, and the content of O₂ is less than 0.1 ppm). Adding methyl acetate at a mass percent of 60 wt% based on the total mass of the solvent. Subsequently, adding and dissolving lithium hexafluorophosphate (LiPF₆) in the organic solvent to obtain an electrolyte solution in which the concentration of the LiPF₆ is 12.5%. Stirring well to obtain an electrolyte solution.

### 3. Preparing a positive electrode plate

Adding lithium iron phosphate as a positive electrode material, acetylene black as a conductive agent, polyvinylidene difluoride (PVDF) as a binder at a mass ratio of 90: 5: 5 into an N-methyl-pyrrolidone (NMP) solvent, and stirring and mixing well to obtain a positive electrode slurry (in which the solid content is 67%). Subsequently, coating both surfaces of a positive current collector with the positive electrode slurry evenly, with a coating weight of approximately 22.7 mg/cm² (such as 350 mg/1540.25 mm²) on a single side; and then performing oven-drying, cold-pressing, and cutting to obtain a positive electrode plate.

### 4. Separator

Using a conventional commercially available polypropylene film as a separator.

### 5. Assembling a secondary battery

Stacking the positive electrode plate (87 mm width × 605 mm length), the separator (98 mm width × 1896 mm length), and the negative electrode plate (93 mm width × 735 mm length) in sequence so that the separator is located between the positive electrode plate and the negative electrode plate to serve a purpose of isolation, and then winding the stacked plates to obtain an electrode assembly; placing the electrode assembly into a battery housing, performing drying and then injecting 12.0 grams of electrolyte solution (3 Ah, injection coefficient 4.0 g/Ah), and performing steps such as chemical formation and static standing to obtain a lithium-ion battery.

Embodiments 2 to 41 and Comparative Embodiments 1 to 9 adopt basically the same method as Embodiment 1 except that one or more of the following parameters are different: the type of the negative active material, the OI value of the negative electrode, the resistance value R of the negative electrode plate, the type and dosage of the first solvent (chain carboxylate), the type and dosage of the first additive, the type and dosage of the second additive, or the Dᵥ₅₀ and specific surface area (BET) of the negative active material. Reference may be made to Table 1 and Table 2.

**Table 1**

| Serial number | OI value of negative electrode plate | Resistance R of negative electrode plate (mΩ) | First solvent (chain carboxylate) | | W₀×1 **00/OI** | W₀×100/ (R×OI) |
|---|---|---|---|---|---|---|
| | | | Type | W₀ (%) | | |
| Embodiment 1 | 15 | 1 | Methyl acetate | 60 | 4 | 4 |
| Embodiment 2 | 15 | 5 | Methyl acetate | 60 | 4 | 0.8 |
| Embodiment 3 | 15 | 30 | Methyl acetate | 60 | 4 | 0.13 |
| Embodiment 4 | 15 | 50 | Methyl acetate | 60 | 4 | 0.08 |
| Embodiment 5 | 6 | 15 | Methyl acetate | 60 | 10 | 0.67 |
| Embodiment 6 | 10 | 15 | Methyl acetate | 60 | 6 | 0.4 |
| Embodiment 7 | 15 | 15 | Methyl acetate | 60 | 4 | 0.27 |
| Embodiment 8 | 20 | 15 | Methyl acetate | 60 | 3 | 0.2 |
| Embodiment 9 | 25 | 15 | Methyl acetate | 60 | 2.4 | 0.16 |
| Embodiment 10 | 15 | 15 | Ethyl acetate | 60 | 4 | 0.27 |
| Embodiment 11 | 15 | 15 | Ethyl difluoroacetate | 60 | 4 | 0.27 |
| Embodiment 12 | 15 | 15 | Methyl difluoroacetate | 60 | 4 | 0.27 |
| Embodiment 13 | 15 | 5 | Methyl acetate | 10 | 0.67 | 0.13 |
| Embodiment 14 | 15 | 15 | Methyl acetate | 20 | 1.33 | 0.09 |
| Embodiment 15 | 15 | 15 | Methyl acetate | 30 | 2 | 0.13 |
| Embodiment 16 | 15 | 15 | Methyl acetate | 40 | 2.67 | 0.18 |
| Embodiment 17 | 15 | 15 | Methyl acetate | 50 | 3.33 | 0.22 |
| Embodiment 18 | 15 | 15 | Methyl acetate | 70 | 4.67 | 0.31 |
| Embodiment 19 | 15 | 15 | Methyl acetate | 80 | 5.33 | 0.36 |
| Embodiment 20 | 15 | 15 | Methyl acetate | 60 | 4 | 0.27 |
| Embodiment 21 | 15 | 15 | Methyl acetate | 60 | 4 | 0.27 |
| Embodiment 22 | 15 | 15 | Methyl acetate | 60 | 4 | 0.27 |
| Embodiment 23 | 15 | 15 | Methyl acetate | 60 | 4 | 0.27 |
| Embodiment 24 | 15 | 15 | Methyl acetate | 60 | 4 | 0.27 |
| Embodiment 25 | 15 | 15 | Methyl acetate | 60 | 4 | 0.27 |
| Embodiment 26 | 15 | 15 | Methyl acetate | 60 | 4 | 0.27 |
| Embodiment 27 | 15 | 15 | Methyl acetate | 60 | 4 | 0.27 |
| Embodiment 28 | 15 | 15 | Methyl acetate | 60 | 4 | 0.27 |
| Embodiment 29 | 15 | 15 | Methyl acetate | 60 | 4 | 0.27 |
| Embodiment 30 | 15 | 15 | Methyl acetate | 60 | 4 | 0.27 |
| Embodiment 31 | 15 | 15 | Methyl acetate | 60 | 4 | 0.27 |
| Embodiment 32 | 15 | 15 | Methyl acetate | 60 | 4 | 0.27 |
| Embodiment 33 | 15 | 15 | Methyl acetate | 60 | 4 | 0.27 |
| Embodiment 34 | 15 | 15 | Methyl acetate | 60 | 4 | 0.27 |
| Embodiment 35 | 15 | 15 | Methyl acetate | 60 | 4 | 0.27 |
| Embodiment 36 | 15 | 15 | Methyl acetate | 60 | 4 | 0.27 |
| Embodiment 37 | 15 | 15 | Methyl acetate | 60 | 4 | 0.27 |
| Embodiment 38 | 15 | 15 | Methyl acetate | 60 | 4 | 0.27 |
| Embodiment 39 | 15 | 15 | Methyl acetate | 60 | 4 | 0.27 |
| Embodiment 40 | 15 | 15 | Methyl acetate | 60 | 4 | 0.27 |
| Embodiment 41 | 15 | 15 | Methyl acetate | 60 | 4 | 0.27 |
| Comparative Embodiment 1 | 5 | 2 | Methyl acetate | 60 | 12 | 6 |
| Comparative Embodiment 2 | 7 | 2 | Ethyl acetate | 80 | 11.43 | 5.71 |
| Comparative Embodiment 3 | 6 | 2 | Methyl difluoroacetate | 70 | 11.67 | 5.83 |
| Comparative Embodiment 4 | 25 | 15 | Ethyl acetate | 20 | 0.8 | 0.05 |
| Comparative Embodiment 5 | 20 | 50 | Ethyl acetate | 60 | 3 | 0.06 |
| Comparative Embodiment 6 | 26 | 20 | Methyl acetate | 30 | 1.15 | 0.06 |
| Comparative Embodiment 7 | 15 | 0.5 | Methyl acetate | 60 | 4 | 8 |
| Comparative Embodiment 8 | 15 | 60 | Methyl acetate | 60 | 4 | 0.07 |
| Comparative Embodiment 9 | 15 | 1.1 | Methyl acetate | 90 | 6 | 5.45 |

| | | | | | | |
|---|---|---|---|---|---|---|
| In Table 1, W₀ is the mass percent of the first solvent in the electrolyte solution solvent. | | | | | | |

**Table 2**

| Serial number | First additive (Diisocyanate) | | Second additive | | Negative active material | |
|---|---|---|---|---|---|---|
| | Type | W₁ (%) | Type | W₂ (%) | Dᵥ₅₀ (µm) | BET (m²/g) |
| Embodiment 1 | / | / | / | / | 17 | 1 |
| Embodiment 2 | / | / | / | / | 17 | 1 |
| Embodiment 3 | / | / | / | / | 17 | 1 |
| Embodiment 4 | / | / | / | / | 17 | 1 |
| Embodiment 5 | / | / | / | / | 17 | 1 |
| Embodiment 6 | / | / | / | / | 17 | 1 |
| Embodiment 7 | / | / | / | / | 17 | 1 |
| Embodiment 8 | / | / | / | / | 17 | 1 |
| Embodiment 9 | / | / | / | / | 17 | 1 |
| Embodiment 10 | / | / | / | / | 17 | 1 |
| Embodiment 11 | / | / | / | / | 17 | 1 |
| Embodiment 12 | / | / | / | / | 17 | 1 |
| Embodiment 13 | / | / | / | / | / | / |
| Embodiment 14 | / | / | / | / | 17 | 1 |
| Embodiment 15 | / | / | / | / | 17 | 1 |
| Embodiment 16 | / | / | / | / | 17 | 1 |
| Embodiment 17 | / | / | / | / | 17 | 1 |
| Embodiment 18 | / | / | / | / | 17 | 1 |
| Embodiment 19 | 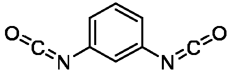 | / | / | / | 17 | 1 |
| Embodiment 20 | 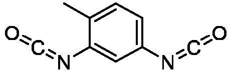 | 1 | / | / | 17 | 1 |
| Embodiment 21 | 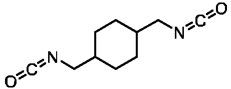 | 1 | / | / | 17 | 1 |
| Embodiment 22 | 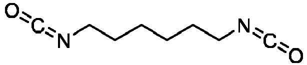 (Hexamethylene diisocyanate) | 1 | / | / | 17 | 1 |
| Embodiment 23 | Hexamethylene diisocyanate | 1 | / | / | 17 | 1 |
| Embodiment 24 | Hexamethylene diisocyanate | 0.005 | / | / | 17 | 1 |
| Embodiment 25 | Hexamethylene diisocyanate | 0.01 | / | / | 17 | 1 |
| Embodiment 26 | Hexamethylene diisocyanate | 0.1 | / | / | 17 | 1 |
| Embodiment 27 | Hexamethylene diisocyanate | 5 | / | / | 17 | 1 |
| Embodiment 28 | Hexamethylene diisocyanate | 10 | / | / | 17 | 1 |
| Embodiment 29 | Hexamethylene diisocyanate | 11 | / | / | 17 | 1 |
| Embodiment 30 | Hexamethylene diisocyanate | 1 | Lithium difluorophospha te | 0.00 5 | 17 | 1 |
| Embodiment 31 | Hexamethylene diisocyanate | 1 | Lithium difluorophospha te | 0.01 | 17 | 1 |
| Embodiment 32 | Hexamethylene diisocyanate | 1 | Lithium difluorophospha te | 0.05 | 17 | 1 |
| Embodiment 33 | Hexamethylene diisocyanate | 1 | Lithium difluorophospha te | 1 | 17 | 1 |
| Embodiment 34 | Hexamethylene diisocyanate | 1 | Lithium difluorophospha te | 5 | 17 | 1 |
| Embodiment 35 | Hexamethylene diisocyanate | 1 | Lithium difluorophospha te | 10 | 17 | 1 |
| Embodiment 36 | Hexamethylene diisocyanate | 1 | Lithium difluorophospha te | 11 | 17 | 1 |
| Embodiment 37 | Hexamethylene diisocyanate | 1 | Lithium monofluorophos phate | 1 | 17 | 1 |
| Embodiment 38 | Hexamethylene diisocyanate | 1 | Lithium tetrafluoroborat e | 1 | 17 | 1 |
| Embodiment 39 | Hexamethylene diisocyanate | 1 | Lithium fluorosulfonate | 1 | 17 | 1 |
| Embodiment 40 | Hexamethylene diisocyanate | 1 | Sodium fluorosulfonate | 1 | 17 | 1 |
| Embodiment 41 | Hexamethylene diisocyanate | 1 | Lithium difluorophospha te | 1 | 10 | 0.7 |
| Comparative Embodiment 1 | / | / | / | / | / | / |
| Comparative Embodiment 2 | / | / | / | / | / | / |
| Comparative Embodiment 3 | / | / | / | / | / | / |
| Comparative Embodiment 4 | / | / | / | / | / | / |
| Comparative Embodiment 5 | / | / | / | / | / | / |
| Comparative Embodiment 6 | / | / | / | / | / | / |
| Comparative Embodiment 7 | / | / | / | / | / | / |
| Comparative Embodiment 8 | / | / | / | / | / | / |
| Comparative Embodiment 9 | / | / | / | / | / | / |

| | | | | | | |
|---|---|---|---|---|---|---|
| In Table 1, W₁ is the mass percent of the first additive in the electrolyte solution (non-aqueous electrolyte); and W₂ is the mass percent of the second additive in the electrolyte solution (non-aqueous electrolyte). | | | | | | |

### Test and Analysis Methods

### 1. Fast-charge performance test

Performing a charge-discharge test on a graded battery at 25 °C at a voltage of 2.5 V to 3.65 V. The test steps are: charging the battery at a constant current of 3 C until the state of charge reaches 30% SOC, and then charging the battery at a constant current of 2 C until reaching 60% SOC; charging the battery at 1 C constant current until reaching 80% SOC, and then maintaining a constant voltage and charging the battery at the constant voltage until the current reaches a cut-off current of 0.01 C; leaving the battery to stand for 5 minutes, and then discharging the battery at a constant current of 1 C until the voltage reaches 2.0 V, and leaving the battery to stand for 5 minutes. Measuring the time spent in charging the battery to 80% SOC.

SOC represents the remaining capacity of the battery, and ranges from 0 to 100%. The SOC value 0 means a fully discharged state of the battery. The SOC value 100% means a fully charged state of the battery.

### 2. Testing the expansion rate of the electrode plate (expansion rate of the electrode plate cycled at 45 °C until 80% SOH)

Charging the battery at a constant current of 0.5 C at 45 °C until the voltage reaches 3.65 V, and then charging the battery at a constant voltage of 3.65 V until the current is less than 0.05 C, and then discharging the lithium-ion battery at a constant current of 0.5 C until the voltage reaches 2.5 V, thereby completing one charge-discharge cycle (that is, 1 cycle). Measuring the thickness L0 of the negative electrode plate by using a ten-thousandth micrometer (Mitutoyo293-100, accuracy: 0.01 mm). Repeating the above operations to charge and discharge the battery, and recording the thickness L1 of the negative electrode plate when the capacity retention rate drops to 80%. Calculating the expansion rate of the negative electrode plate when the battery is cycled at 45 °C to 80% SOH as: expansion rate = (L1/L0 - 1) × 100%.

### 3. Testing the cycle performance

Charging the battery at a constant current of 0.5 C at 45 °C until the voltage reaches 3.65 V, and then charging the battery at a constant voltage of 3.65 V until the current is less than 0.05 C, and then discharging the lithium-ion battery at a constant current of 0.5 C until the voltage reaches 2.5 V, thereby completing one charge-discharge cycle (that is, 1 cycle). Repeating the above operations to charge and discharge the battery, and recording the number of cycles when the capacity retention rate drops to 80%. Recording the number of cycles as "number of cycles of the battery cycled at 45 °C to 80% SOH".

### 4. Testing the anti-gassing capability

Charging the lithium-ion secondary battery at a constant current of 0.33 C until the voltage reaches 3.65 V, and then charging the battery at a constant voltage of 3.65 V until the current reaches 0.05 C so that the lithium-ion battery is fully charged. Measuring the volume of the battery by using a drainage method. Recording the volume at this time as a before-storage volume. Subsequently, storing the lithium-ion battery at 60 °C for 30 days. Placing the lithium-ion secondary battery in a 25 °C environment upon completion of the storage, and measuring the volume of the battery by using a drainage method. Recording the volume at this time as an after-storage volume. Calculating the volume expansion rate of the battery according to the following formula:

Volume expansion rate of the battery = (after-storage volume/before-storage volume - 1) × 100%.

Recording the volume expansion rate as an "expansion rate of the battery cell stored at 60 °C for 30 days". The lower the value, the lower the amount of gas produced. The lower the value, the anti-gassing capability is higher.

### 5. Testing the storage performance

Charging the lithium-ion battery at 25 °C at a constant current of 0.33 C until the voltage reaches 3.65 V, and then charging the battery at a constant voltage of 3.65 V until the current is less than 0.05 C, and then discharging the lithium-ion battery at a constant current of 0.33 C until the voltage reaches 2.5 V (the discharge capacity of the battery is recorded as C0). Placing the fully charged battery in an oven at 60 °C for 30 days, and then taking out the battery. Placing the battery into an 25 °C environment, and performing a 0.33 C discharge. Recording the discharge capacity as C1. Calculating the capacity retention rate as: capacity retention rate = (C1/C0) × 100 %, denoted as "capacity retention rate of the battery cycled at 60 °C for 30 days".

### Test and Analysis Results

Table 3 shows the test results.

The secondary batteries prepared in Embodiments 1 to 41 achieves superior comprehensive performance in terms of fast-charge capability, low expansion rate of negative electrode plate, and battery cycle performance. In the high-temperature gas production test, the cell expansion rate also reflects the anti-gassing capability. References may be made to data of the fast-charge time, the expansion rate of the negative electrode plate cycled at 45 °C to 80% SOH, the number of cycles counted when the battery is cycled at 45 °C to 80% SOH, and the expansion rate of the battery cell stored at 60 °C for 30 days. In addition, the secondary batteries prepared in Embodiments 1 to 41 also exhibit superior storage performance (referring to the data of capacity retention rate of the battery stored at 60 °C for 30 days).

The value of W₀×100/(R×OI) in Comparative Embodiments 1 to 9 is either less than 0.08 or greater than 5, and therefore, the comprehensive performance of the secondary batteries in terms of fast-charge capability, cycle performance, and safety performance is significantly inferior to Embodiments 1 to 41.

In Comparative Embodiments 1 to 5, although the OI value, the resistance value R of the negative electrode plate, and W₀ are individually applicable to the technical solution of this application, the combination relationship of such parameters does not satisfy 0.08 ≤ W₀ × 100/(R × OI) ≤ 5. Consequently, it is difficult to achieve a superior fast-charge capability, a low expansion rate of the electrode plate, a low expansion rate of the battery cell caused by gas production, and superior cycle performance concurrently. At least one of the performance parameters of fast-charge capability, low expansion rate of the electrode plate, low expansion rate of the battery cell, or superior cycle performance is significantly inferior or not improved. In Comparative Embodiment 1, W₀×100/(R×OI) is greater than 5, thereby making the negative active material be detached from the negative electrode plate, and causing the battery cell to fail. The expansion rate of the negative electrode plate in Comparative Embodiment 2 is significantly high, the expansion rate of the battery cell in Comparative Embodiment 3 is significantly high, and the fast-charge capability in Comparative Embodiments 4 to 5 is deteriorated significantly.

In Comparative Embodiment 6, the OI value is slightly large, but the value of W₀×100/(R×OI) is unduly small. In Comparative Embodiment 7, the resistance value R of the negative electrode plate is slightly low, but the value of W₀×100/(R×OI) is unduly large. In Comparative Embodiment 8, the R value is slightly large, but the value of W₀×100/(R×OI) is unduly small. In Comparative Embodiment 9, the content of the chain carboxylate (the first solvent) is slightly high, but the value of W₀×100/(R×OI) is unduly large. As a result, Comparative Embodiments 6 to 9 fail to achieve a superior comprehensive effect in terms of fast-charge capability, cycle performance, and safety performance concurrently.

In Comparative Embodiments 7 and 9, the fast-charge time is relatively short at the cost of larger expansion of the electrode plate, significantly deteriorated cycle performance, significantly larger expansion of the battery cell caused by gas production at a high temperature, and inferior storage performance.

In Comparative Embodiment 8, the expansion of the electrode plate is suppressed to some extent at the cost of a lower fast-charge capability, significantly deteriorated cycle performance, and larger expansion of the battery cell caused by gas production.

**Table 3**

| Serial number | Fast-charge time (min) | Expansion rate of negative electrode plate cycled at 45 °C to 80% SOH | Number of cycles of battery cycled at 45 °C to 80% SOH | Expansion rate of battery cell stored at 60 °C for 30 days | Capacity retention rate of battery cell stored at 60 °C for 30 days |
|---|---|---|---|---|---|
| Embodiment 1 | 25.7 | 35.3% | 824 | 9.0 | 85.3% |
| Embodiment 2 | 26.2 | 34.6% | 853 | 8.8 | 86.9% |
| Embodiment 3 | 28.6 | 33.1% | 867 | 8.6 | 87.2% |
| Embodiment 4 | 30.3 | 32.2% | 824 | 8.7 | 86.1% |
| Embodiment 5 | 22.6 | 30.2% | 835 | 9.0 | 86.2% |
| Embodiment 6 | 25.3 | 32.9% | 878 | 8.7 | 87.3% |
| Embodiment 7 | 27 | 34.0% | 900 | 8.5 | 88.1% |
| Embodiment 8 | 30.4 | 34.7% | 864 | 8.2 | 87.1% |
| Embodiment 9 | 34.1 | 35.5% | 823 | 8.0 | 86.7% |
| Embodiment 10 | 30.2 | 32.6% | 1156 | 5.3 | 90.2% |
| Embodiment 11 | 33.1 | 30.2% | 1023 | 6.2 | 89.2% |
| Embodiment 12 | 30.6 | 31.1% | 965 | 7.6 | 88.9% |
| Embodiment 13 | 33.2 | 30.2% | 1198 | 6.8 | 91.5% |
| Embodiment 14 | 31.1 | 31.8% | 1145 | 7.2 | 91.2% |
| Embodiment 15 | 30.3 | 32.2% | 1076 | 7.6 | 90.4% |
| Embodiment 16 | 29.2 | 33.1% | 1012 | 8.0 | 89.5% |
| Embodiment 17 | 28.3 | 33.7% | 956 | 8.4 | 88.7% |
| Embodiment 18 | 26.1 | 34.7% | 843 | 8.7 | 87.3% |
| Embodiment 19 | 25.2 | 35.1% | 801 | 9.0 | 86.5% |
| Embodiment 20 | 29.2 | 29.1% | 998 | 8.0 | 92.1% |
| Embodiment 21 | 28.4 | 29.6% | 1011 | 7.8 | 93.2% |
| Embodiment 22 | 30.5 | 30.2% | 987 | 8.2 | 90.8% |
| Embodiment 23 | 27.6 | 28.5% | 1056 | 7.5 | 94.5% |
| Embodiment 24 | 27.1 | 33.6% | 902 | 8.4 | 88.9% |
| Embodiment 25 | 27.3 | 31.8% | 975 | 8.1 | 90.5% |
| Embodiment 26 | 27.4 | 30.2% | 1001 | 7.7 | 91.8% |
| Embodiment 27 | 28.5 | 29.4% | 975 | 7.1 | 93.2% |
| Embodiment 28 | 29.4 | 30.5% | 934 | 6.7 | 91.3% |
| Embodiment 29 | 31.7 | 32.6% | 901 | 6.0 | 89.2% |
| Embodiment 30 | 27.5 | 28.4% | 1098 | 7.3 | 94.6% |
| Embodiment 31 | 27 | 27.5% | 1187 | 6.8 | 95.7% |
| Embodiment 32 | 26.4 | 26.3% | 1234 | 6.1 | 96.5% |
| Embodiment 33 | 26 | 25.6% | 1301 | 5.4 | 97.0% |
| Embodiment 34 | 26.7 | 26.2% | 1265 | 5.0 | 96.1% |
| Embodiment 35 | 27.5 | 27.1% | 1213 | 4.3 | 95.6% |
| Embodiment 36 | 29.0 | 28.3% | 1187 | 3.9 | 94.2% |
| Embodiment 37 | 26.3 | 25.8% | 1287 | 5.7 | 96.4% |
| Embodiment 38 | 26.5 | 26.2% | 1256 | 5.9 | 95.2% |
| Embodiment 39 | 27.0 | 26.5% | 1295 | 5.5 | 94.2% |
| Embodiment 40 | 27.2 | 26.7% | 1242 | 6.2 | 93.2% |
| Embodiment 41 | 25.3 | 26.4% | 1287 | 5.8 | 96.4% |
| Comparative Embodiment 1 | Active material is detached from the negative electrode plate, and the battery cell fails | | | | |
| Comparative Embodiment 2 | 26.2 | 36.1% | 1014 | 7.6 | 84.6% |
| Comparative Embodiment 3 | 27.5 | 34.2% | 865 | 9.6 | 86.1% |
| Comparative Embodiment 4 | 41.4 | 31.9% | 1322 | 3.5 | 91.7% |
| Comparative Embodiment 5 | 36.9 | 31.5% | 1044 | 5.2 | 87.2% |
| Comparative Embodiment 6 | 37.4 | 33.7% | 999 | 7.1 | 89.0% |
| Comparative Embodiment 7 | 25.2 | 36.0% | 786 | 9.4 | 84.8% |
| Comparative Embodiment 8 | 35.5 | 32.0% | 792 | 9.1 | 85.1% |
| Comparative Embodiment 9 | 19.8 | 38.2% | 427 | 13.0 | 80.8% |

The technical features in the foregoing embodiments may be combined arbitrarily. For brevity, not all possible combinations of the technical features in the embodiments are described. However, to the extent that no conflict exists, all such combinations of the technical features are considered falling within the scope hereof.

It is hereby noted that this application is not limited to the foregoing embodiments. The foregoing embodiments are merely examples. Any and all embodiments with substantively the same constituents or exerting the same effects as the technical ideas hereof without departing from the scope of the technical solutions of this application still fall within the technical scope of this application. The foregoing embodiments merely describe several implementations of this application. The description is relatively detailed, but constitutes no limitation on the patent scope hereof. In addition, all kinds of variations of the embodiments conceivable by a person skilled in the art and any other embodiments derived by combining some constituents of the embodiments hereof without departing from the subject-matter of this application still fall within the scope of this application. It is hereby noted that several variations and improvements, which may be made to the embodiments by a person of ordinary skill in the art without departing from the concept of this application, fall within the protection scope of this application. Therefore, the protection scope of this application is subject to the claims appended hereto, and the specification and the accompanying drawings may be used for interpreting the subject-matter of the claims.

## Claims

1. A secondary battery, comprising a positive electrode plate, a negative electrode plate, and a non-aqueous electrolyte, wherein the negative electrode plate comprises a negative active material, the negative active material comprises a graphite material, the non-aqueous electrolyte comprises a solvent, the solvent comprises a first solvent, and the first solvent is chain carboxylate; and
an OI value of the negative electrode plate, a resistance value R of the negative electrode plate, and a mass percent W₀ of the first solvent in the solvent satisfy the following relation: 0.08/mΩ ≤ W₀ × 100/(R × OI) ≤ 5/mΩ, wherein
the OI value of the negative electrode plate means a ratio of an intensity of a 004 crystal plane diffraction peak to an intensity of a 110 crystal plane diffraction peak of the graphite material, and R is in units of mΩ.

2. The secondary battery according to claim 1, wherein 6 ≤ OI ≤ 25.
optionally, 6 ≤ OI ≤ 18;
further optionally, 12 ≤ OI ≤ 18.

3. The secondary battery according to claim 1 or 2, wherein 1 mΩ ≤ R ≤ 50 mΩ.
optionally, 5 mΩ ≤ R ≤ 30 mΩ;
further optionally, 10 mΩ ≤ R ≤ 20 mΩ.

4. The secondary battery according to any one of claims 1 to 3, wherein 10% ≤ W₀ ≤ 80%;
optionally, 20% ≤ W₀ ≤ 80%; further optionally, 30% ≤ W₀ ≤ 70%; still further optionally, 50% ≤ W₀ ≤ 70%;
alternatively, 10% ≤ W₀ ≤ 60%; further optionally, 20% ≤ W₀ ≤ 60%.

5. The secondary battery according to any one of claims 1 to 4, wherein 0.67 ≤ W₀ × 100/OI ≤ 10;
optionally, 1 ≤ W₀ × 100/OI ≤ 10, further optionally, 1 ≤ W₀ × 100/OI ≤ 5; still further optionally, 3 ≤ W₀ × 100/OI ≤ 5;
alternatively, 0.67 ≤ W₀ × 100/OI ≤ 4; further optionally, 1 ≤ W₀ × 100/OI ≤ 4.

6. The secondary battery according to any one of claims 1 to 5, wherein
0.1/mΩ ≤ W₀ × 100/(R × OI) ≤ 5/mΩ; and
optionally, 0.1/mΩ ≤ W₀ × 100/(R × OI) ≤ 2/mΩ.

7. The secondary battery according to any one of claims 1 to 6, wherein
6 ≤ OI ≤ 18, 10 mΩ ≤ R ≤ 20 mΩ, and 10% ≤ W₀ ≤ 80%;
optionally, 12 ≤ OI ≤ 18, 10 mΩ ≤ R ≤ 20 mΩ, and 10% ≤ W₀ ≤ 60%; further optionally, 20% ≤ W₀ ≤ 60%;
alternatively, 12 ≤ OI ≤ 18, 10 mΩ ≤ R ≤ 20 mΩ, and 50% ≤ W₀ ≤ 70%.

8. The secondary battery according to any one of claims 1 to 7, wherein the first solvent comprises a compound represented by Formula (1): 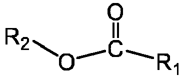 Formula (1), wherein
R₁ and R₂ each independently are C₁ to C₃ alkyl or C₁ to C₃ haloalkyl;
optionally, R₁ and R₂ each independently are C₁ to C₃ alkyl or C₁ to C₃ fluoroalkyl;
further optionally, R₁ and R₂ each independently are one of methyl, ethyl, propyl, fluoromethyl, fluoroethyl, or fluoropropyl;
still further optionally, R₁ and R₂ each independently are one of methyl, ethyl, fluoromethyl, or fluoroethyl; and
still further optionally, the first solvent comprises one or more of the following compounds: methyl acetate, ethyl acetate, methyl difluoroacetate, or ethyl difluoroacetate.

9. The secondary battery according to any one of claims 1 to 8, wherein the non-aqueous electrolyte further comprises a first additive; and the first additive is diisocyanate.

10. The secondary battery according to any one of claims 1 to 8, wherein the first additive comprises a compound represented by the following structural formula: O=C=N-R₃-N=C=O Formula (2), wherein
R₃ is an unsubstituted or Ra-substituted C₁ to C₁₈ alkylene; Ra comprises one or more of the following substituents: halogen atom, -CN, -NCO, -OH, -COOH, -SOOH, -OC(=O)R₁₁, R₁₂OC(=O)-, C₁ to C₁₀ alkyl, C₂ to C₁₀ alkenyl, C₂ to C₁₀ alkynyl, or C₂ to C₁₀ oxaalkyl; and R₁₁ and R₁₂ each independently are alkyl or haloalkyl;
optionally, R₃ is C₂ to C₁₀ alkylidene, C₂ to C₁₀ heteroalkylidene, C₆ to C₁₈ arylene, C₂ to C₁₈ heteroarylene, C₃ to C₁₈ alicyclylene, or C₃ to C₁₈ heteroalicyclylene, and any one of the foregoing groups is unsubstituted or Ra-substituted;
alternatively, R₃ is unsubstituted or Ra-substituted C₂ to C₁₀ alkylidene, unsubstituted or Ra-substituted C₃ to C₁₈ divalent cycloalkyl, or unsubstituted or Ra-substituted C₆ to C₁₈ arylene; further optionally, R₃ is C₂ to C₁₀ alkylidene, C₆ to C_{I8} divalent cycloalkyl or C₆ to C₁₈ arylene; still further optionally, R₃ is C₄ to C₁₀ alkylidene, C₆ to C₁₄ divalent cycloalkyl or C₆ to C₁₄ arylene; still further optionally, R₃ is C₄ to C₁₀ alkylidene, C₆ to C₁₀ divalent cycloalkyl or C₆ to C₁₀ arylene; still further optionally, R₃ is a C₄ to C₈ hexylidene, C₆ to C₁₀ divalent cycloalkyl containing a hexyl ring, or C₆ to C₁₀ arylene containing a benzene ring;
alternatively, the first additive comprises one or more of the following compounds: hexamethylene diisocyanate, 1,4-bis(isocyanatomethyl)cyclohexane, 1,3-diisocyanatobenzene, or 2,4-diisocyanate-1-toluene.

11. The secondary battery according to any one of claims 8 to 10, wherein a mass percent of the first additive in the non-aqueous electrolyte is 0% to 11%;
optionally, the mass percent of the first additive in the non-aqueous electrolyte is 0.005% to 11%.
further optionally, the mass percent of the first additive in the non-aqueous electrolyte is 0.005% to 10%;
still further optionally, the mass percent of the first additive in the non-aqueous electrolyte is 0.01% to 10%;
still further optionally, the mass percent of the first additive in the non-aqueous electrolyte is 0.1% to 5%; and
still further optionally, the mass percent of the first additive in the non-aqueous electrolyte is 1% to 5%.

12. The secondary battery according to any one of claims 1 to 11, wherein the non-aqueous electrolyte further comprises a second additive, and the second additive comprises one or more of lithium monofluorophosphate, lithium difluorophosphate, lithium tetrafluoroborate, a compound represented by Formula (3), or fluorosulfonate; 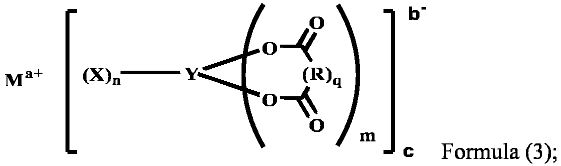
in Formula (3), a, b, and c each independently are a positive integer, m is an integer selected from 1 to 3, n is an integer selected from 0 to 4, and q is 0 or 1; M^{a+} is a metal ion with a-valence positive charge; any one Y is independently a boron atom or a phosphorus atom; X is a halogen atom; and any one R is independently one of a substituted or unsubstituted C₁ to C₁₀ alkylidene, substituted or unsubstituted C₁ to C₁₀ haloalkylidene, substituted or unsubstituted C₆ to C₂₀ arylene, or substituted or unsubstituted C₆ to C₂₀ haloarylene;
optionally, any one R is independently one of Rc-substituted or unsubstituted C₁ to C₁₀ alkylidene, Rc-substituted or unsubstituted C₁ to C₁₀ haloalkylidene, Rc-substituted or unsubstituted C₆ to C₂₀ arylene, or Rc-substituted or unsubstituted C₆ to C₂₀ haloarylene; and a substituent in the Rc-substituted C₁ to C₁₀ alkylidene, a substituent in the Rc-substituted C₁ to C₁₀ haloalkylidene, a substituent in the Re-substituted C₆ to C₂₀ arylene, and an Rc substituent in the Rc-substituted C₆ to C₂₀ haloarylene each independently optionally comprise one or more of the following substituents: halogen atom, -CN, -NCO, -OH, -COOH, - SOOH, -OC=(O)R₄₁, -C=(O)OR₄₂, C₁ to C₁₀ alkyl, C₂ to C₁₀ alkenyl, C₂ to C₁₀ alkynyl, C₂ to C₁₀ alkoxyl, wherein R₄₁ and R₄₂ each independently are C₁ to C₆ alkyl;
optionally, in the non-aqueous electrolyte, M in M^{a+} comprises one or more of Li, Na, K, Rb, Cs, Mg, Ca, Ba, Al, Fe, Cu, or Ni; and
optionally, a, b, and c each independently are selected from 1, 2, or 3.

13. The secondary battery according to claim 12, wherein the second additive comprises one or more of lithium difluorophosphate, lithium monofluorophosphate, lithium tetrafluoroborate, lithium fluorosulfonate, or sodium fluorosulfonate.

14. The secondary battery according to any one of claims 12 to 13, wherein a mass percent of the second additive in the non-aqueous electrolyte is 0.005% to 11%;
optionally, the mass percent of the second additive in the non-aqueous electrolyte is 0.005% to 11%;
further, the mass percent of the second additive in the non-aqueous electrolyte is 0.005% to 10%; and
still further optionally, the mass percent of the second additive in the non-aqueous electrolyte is 0.05% to 5%.

15. The secondary battery according to any one of claims 1 to 14, wherein a volume median diameter Dᵥ₅₀ of the negative active material is greater than or equal to 6 µm, and Dᵥ₅₀ represents a particle diameter corresponding to a cumulative volume distribution percentage 50% in a volume-based particle size distribution curve of a substance or material;
optionally, the volume median diameter Dᵥ₅₀ of the negative active material is 6 µm to 20 µm; and
further optionally, the volume median diameter Dᵥ₅₀ of the negative active material is 15 µm to 20 µm.

16. The secondary battery according to any one of claims 1 to 15, wherein a BET specific surface area of the negative active material is 0.5 m²/g to 2.0 m²/g; and
optionally, the BET specific surface area of the negative active material is 0.8 m²/g to 1.5 m²/g.

17. The secondary battery according to any one of claims 1 to 16, wherein the graphite material comprises one or more of artificial graphite or natural graphite; and
optionally, the graphite material comprises artificial graphite.

18. The secondary battery according to any one of claims 1 to 17, wherein a mass percent of the graphite material in the negative active material is greater than or equal to 50%;
optionally, the mass percent of the graphite material in the negative active material is greater than or equal to 80%; and
further optionally, the mass percent of the graphite material in the negative active material is 100%.

19. The secondary battery according to any one of claims 1 to 18, wherein the secondary battery is a lithium-ion secondary battery.

20. An electrical device, comprising the secondary battery according to any one of claims 1 to 19.
